(19) **Europäisches Patentamt / European Patent Office / Office européen des brevets**

(11) **EP 2 815 719 B1**

(12) **EUROPEAN PATENT SPECIFICATION**

(45) Date of publication and mention
of the grant of the patent:
**03.10.2018   Bulletin 2018/40**

(51) Int Cl.:
**A61C 13/15** $^{(2006.01)}$          *A61C 1/08* $^{(2006.01)}$

(21) Application number: **14172118.3**

(22) Date of filing: **12.06.2014**

(54) **Dental light curing device**

Zahnmedizinische Lichthärtevorrichtung

Dispositif de photopolymérisation dentaire

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2013   US 201313924439**

(43) Date of publication of application:
**24.12.2014   Bulletin 2014/52**

(73) Proprietor: **Kerr Corporation**
**Orange, CA 92867 (US)**

(72) Inventors:
• **Gill, Owen J**
**Southbury, CT Connecticut 06488-2750 (US)**
• **Wyatt, Stacy L**
**Irvine, CA California 92614-5324 (US)**
• **Barry, Ruth**
**Stoughton, WI Wisconsin 53589-3554 (US)**
• **Soundararajan, Gopikrishnan**
**Aliso Viejo, CA California 92656-2699 (US)**

(74) Representative: **Findlay, Alice Rosemary**
**Reddie & Grose LLP**
**The White Chapel Building**
**10 Whitechapel High Street**
**London E1 8QS (GB)**

(56) References cited:
EP-A2- 2 058 636          WO-A1-2010/115082
JP-A- 2011 135 973       US-A1- 2005 033 119
US-A1- 2006 275 732    US-A1- 2007 224 570
US-A1- 2011 143 304    US-A1- 2012 230 017
US-B1- 6 419 483

## Description

This invention relates to illumination or light devices, and more specifically to an illumination device that is used for oral and dental applications and provides light to illuminate and to cure light-curable compounds in dental applications

Many illumination devices or light devices exist for use in dental and oral applications. One specific category of dental illumination devices is directed to hand-held devices that are held in proximity to the mouth of the patient to illuminate an area within the patient's mouth for various reasons. One particular usage is directed to curing light-curable compounds in the mouth. While suitable hand-held light devices exist for dental applications, there are often various drawbacks associated with such light devices, particularly with respect to dental curing lights.

Many such dental lights have a body, which contains the light elements, such as light-emitting diodes (LED). A tapered and curved light guide, then interfaces with the end of the body and the light-emitting elements to capture the light and direct it where desired. Generally, such light guides are bundles of fiber-optic elements, which operate to capture the light in the device, away from the patient's mouth, and then forward that light to a tip that may be placed at the area of interest within a patient's mouth. While such light guides operate in a suitable manner, they are also very inefficient. Almost half of the light generated in the device is lost in the transmission from its source down to the tip, through the light guide. Such inefficiency requires a significantly large light engine to generate the light needed at the curing site, such as for curing a compound. In turn, heat is generated, which must be properly removed and directed away from the light engine. The greater the output required by the light engine, the more heat that must be addressed.

Another issue associated with such dental lights is their sterilization. As may be appreciated, the tip of the dental light is generally brought into proximity or into actual contact with the mouth of the patient or some portion of the mouth. Thus, the tip of the light device is exposed to various germs and bacteria. Accordingly, in order to prevent the propagation of germs or infection between patients, dental instruments are often sterilized, such as by being autoclaved at a very high temperature. While suggestions and some attempts have been made in the art to move the light engine of a dental light closer to the operating tip, such attempts have not thoroughly addressed the issue of sterilization. For example, the temperature at which autoclaving is achieved is potentially damaging to a light engine, such as the light-emitting elements in an LED array. Accordingly, the issue of sterilization has not been adequately addressed by existing dental lights, such as dental curing lights.

Another drawback to existing dental lights is directed to their need for a power source. Often times, such lights are actually plugged into a base that then couples to an AC source, such as a wall outlet. Some are connected directly to an AC wall outlet. Some portable dental light devices are not attached to a base, but rather utilize batteries, such as rechargeable batteries. However, rechargeable batteries require a significant amount of time to charge, and thus, there may be some valuable down time required for the dental light, when it might otherwise be put to use. Furthermore, existing battery charging technology uses batteries that are subject to a somewhat limited number of charge cycles. Their continued ability to take and maintain a charge is reduced over time and usage. After a somewhat limited number of cycles, the batteries have to be replaced. Thus, there is still a need to address power issues in portable curing lights.

US 6419483 discloses a method and apparatus for curing photocurable dental materials which involve a solid state light emitter and a source of electrical current connected to the light emitter. The source of electrical current provides a current to the light emitter that is sufficient to reduce the lifetime of the light emitter to less than 10 hours. The intensity of light from the light emitter is substantially increased and the apparatus can be conveniently disposed of after use on a single patient. A light guide that includes two conical optical surfaces collects light from the solid state light emitter and optionally directs the light to a third optical surface which has the shape of an elongated, curved tube.

WO 2010/115082 discloses a light device 10 which includes a housing 12 and a tip structure 14 configured to be removably coupled with the housing 12. The tip structure 14 includes a light-emitting device 40 that is operable for emitting light positioned at a distal end 24 of the tip structure 14 and a body 36 for housing the light-emitting device 40. The tip structure 14 is formed of an autoclavable material capable of withstanding autoclaving. A power supply circuit 28 is positioned in the housing 12 and coupled to the light-emitting device 40 to power the device when the tip structure 14 is coupled with the housing 12. The power supply circuit 28 is rechargeable and includes at least one ultracapacitor element 90 for being charged and the power supply circuit 28 configured to discharge the ultracapacitor 90 as a current source to drive the at least one light-emitting device 40.

US 2012/0230017 discloses a light-emitting wand configured for selective cooperative coupling with a handset. The wand extends between longitudinally opposed wand-body proximal and distal ends, the distal end being configured to retain a light-emitting element. Extending in mutual parallel alignment between the proximal and distal ends are electrically-conductive first and second core members. Each core member has, at the distal end, a light-source contact configured for electrical contact with a respective pole of the light-emitting element and, at the proximal end, a power-source contact configured for electrical contact with a respective terminal of an electrical-power source. The core members are maintained in mutual electrical isolation and overmolded with an electrically-insulative material through which the power-source contacts are exposed in order to enable selective electrical connection with electrical-power source terminals. In addition to carrying electrical current, the core members serve as heat sinks to dissipate the thermal output of the light-emitting element.

The invention is defined by the claims.

The invention will now be further described by way of example with reference to the accompanying drawings, in which:

Figure 1 is a side view of a light device not according to the present invention.

Figure 1A is a perspective view of a light device in a charging base.

Figure 2 is an exploded cross-sectional view of the light device of Figure 1.

Figure 2A is an enlarged view of a portion of Figure 2.

Figure 3 is a side cross-sectional view of the light device of Figure 1 showing the tip structure engaging the housing.

Figure 4 is a partial cross-sectional view of an alternative embodiment of a light device not according to the invention.

Figure 5 is a plan view of an end cap structure for a tip structure not according to the invention.

Figure 6 is a circuit schematic for a charging circuit to be used to charge the invented light device.

Figure 7 is a graphical depiction of the curve for operation of the circuit of Figure 7.

Figure 8 is a graphical depiction of the charging of the ultracapacitors according to an embodiment of the invention.

Figure 9A is a graphical depiction of a capacitor charging curve.

Figure 9B is a graphical depiction of a capacitor discharging curve.

Figure 10 is a circuit schematic showing a power supply current source circuit for one embodiment of the invention.

Figure 11 is a circuit schematic showing a power supply current source circuit for another embodiment of the invention.

Figure 12 is a circuit schematic showing a power supply current source circuit for another embodiment of the invention.

Figure 13 is a circuit schematic showing a power supply current source circuit for another embodiment of the invention.

Figure 14 is a graphical depiction of a discharge function according to an embodiment of the invention.

Figure 15 is a circuit schematic showing a power supply current source circuit for another embodiment of the invention.

Figure 16 is a circuit schematic showing a power supply current source circuit for another embodiment of the invention.

Figure 17 is a perspective view of an alternative embodiment of a light device in a charger base.

Figure 18 is an exploded view of a charger base in accordance with the embodiment of Figure 17.

Figure 19 is a perspective view of a plug of the charger base in accordance with the embodiment of Figure 17.

Figure 20 is an exploded view of a light device according to the invention and in accordance with the embodiment of Figure 17.

Figure 21 is a sectional view of the light device in accordance with the embodiment of Figure 20.

Figure 22 is an exploded view of a removable tip for a light device in accordance with the embodiment of Figure 20.

Figure 23 is an exploded view of a socket for a light device in accordance with the embodiment of Figure 20.

Figure 24 is a partial cross-sectional view of the socket for a light device in accordance with the embodiment of Figure 20.

Figure 25 is a cross-sectional view of the light device in accordance with the embodiment of Figure 20.

Figure 26 is a partial cross-sectional view of a light engine for a light device in accordance with the embodiment of Figure 20.

Figure 26A is a perspective view of the light engine for a light device in accordance with the embodiment of Figure 20.

Figure 26B is a side view of the light engine for a light device in accordance with the embodiment of Figure 20.

Figure 26C is a top view of the light engine for a light device in accordance with the embodiment of Figure 20.

Figures 27-27G are circuit schematics for a charging circuit in the charger base in accordance with the embodiment of Figure 17.

Figures 28-28C are circuit schematics for a main control circuit for a light device in accordance with the embodiment of Figure 20.

Figures 29-29D are circuit schematics for a discharge circuit for a light device in accordance with the embodiment of Figure 20.

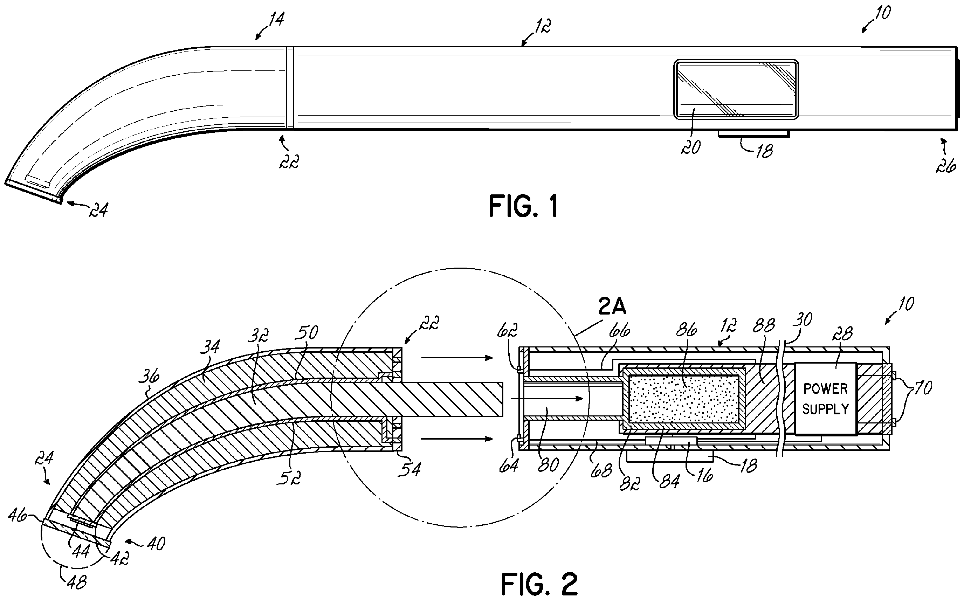

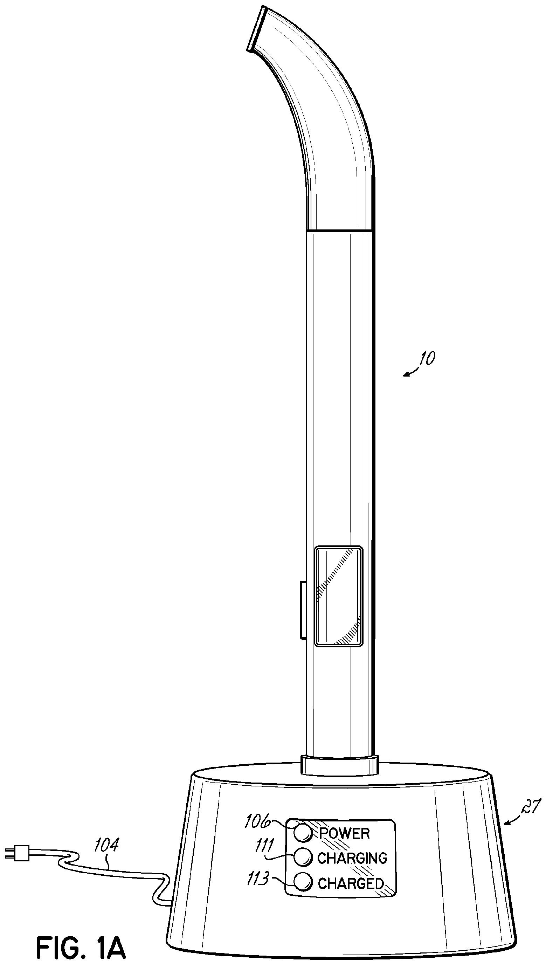

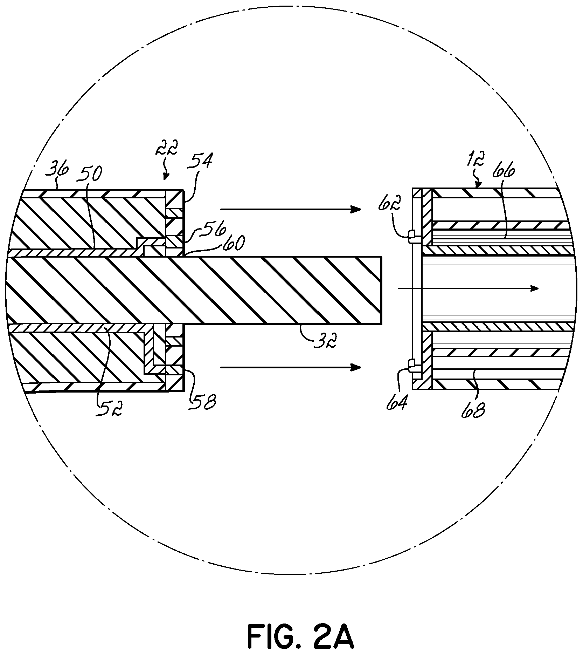

Figure 1 illustrates one embodiment of a light device 10 not according to the invention. While one embodiment of light device 10 might be used for curing, other uses are also anticipated, such as illumination, tooth whitening, or other treatment applications. Curing device 10 includes the housing 12 and a tip structure 14 that is removably coupled to the housing 12. In accordance with one feature, as discussed further hereinbelow, the tip structure 14 may be removed so that it may be separately autoclaved from the overall device. Device 10 also includes suitable control electronics 16 (See Figure 2) with external controls 18 that may include buttons, switches, or other suitable manual controls for controlling device 10. A display device 20 might also be utilized and may include a screen, individual light elements, or other graphical elements for providing a visual display of the operation of device 10. For example, the operational mode or setting of the device, the selectable curing times, the remaining curing time, the charging or power status, and diagnostic graphics might also be illustrated utilizing a visual display 20. The tip structure 14 includes a proximal end 22 that is removably coupled with housing 12, and a distal end 24, which is placed within the mouth of a patient for curing a light-curable compound, in accordance with the invention. The base 26 of housing 12 might be coupled to a suitable external power supply, such as an AC or DC source in the form of a charging base or dock 27, as shown in Figure 1A, for charging rechargeable internal elements of power supply circuit 28 of the device 10 (See Figure 2). Base 26 might also be configured to fit within a suitable structure, such as a standalone, table-mounted base, a mounting structure for mounting it on a wall, pole, or chair, or might be incorporated in a portion of a dental chair for holding and charging the curing device 10.

Figures 2 and 2A illustrate cross-sectional views of device 10, showing the interface between the tip structure 14 and housing 12.

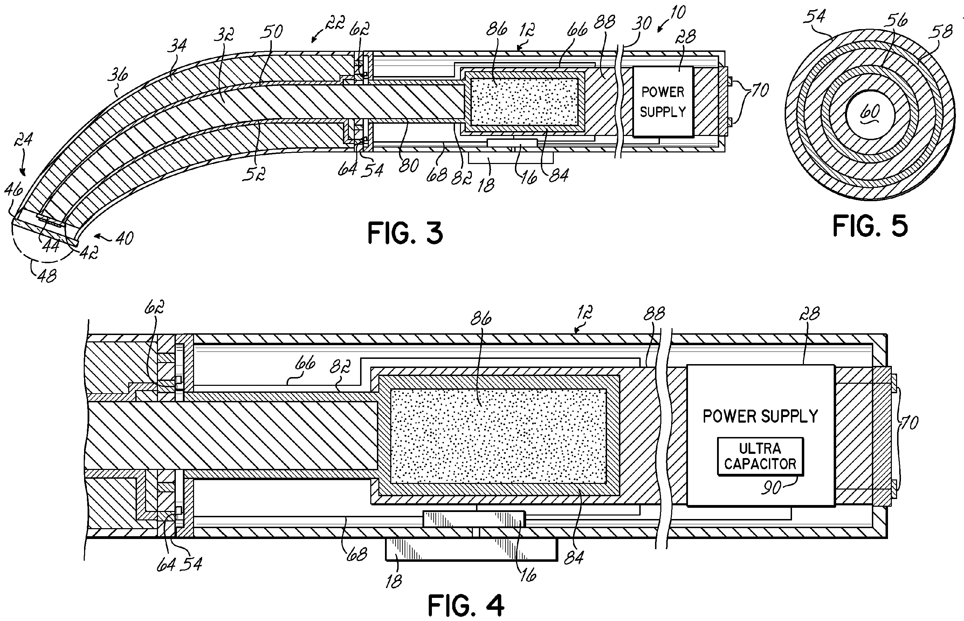

Figure 3 illustrates the tip structure 14 engaging the housing. In the figures, section lines 30 are shown indicating a removable portion of the housing 12 for illustrative purposes. The housing 12, as well as the tip structure

14, may be sized as appropriate for a hand-held curing device that may be manipulated to position the distal end 24 of the device in the mouth of a patient, or otherwise proximate to light-curable material and compounds.

Tip structure 14 includes a heat sink structure or element 32 that extends in the tip structure from the proximal end 22 to the distal end 24. In one embodiment, as illustrated in Figures 2 and 2A, the heat sink 32 extends past the proximal end 22 of the tip structure 14 to engage the housing 12 for appropriate thermal transfer of heat from a curing light device. The heat sink may be made from a suitable heat-transfer or heat-conducting material, such as a metal (e.g. copper) or aluminum. Alternatively, a high thermal conductivity material such as Pyrolytic Graphite sheets (PGS) might be used for heat sink 32. In one embodiment, the heat sink 32 is an elongated copper tube formed in an appropriate shape for positioning inside the tip structure 14. Suitable thermal insulation material 34 surrounds the heat sink 32. Tip structure 14 includes a body 36 that houses the elements of the tip structure, and is appropriately sealed at its proximal and distal ends 22 and 24, as discussed further hereinbelow. The body 36 is preferably made from an autoclavable material. As noted above, it is desirable to sterilize certain reusable dental elements, such as those that are used in or inserted into or onto or proximate to the mouth of a patient. Past curing light devices have not been autoclavable to the degree desired by dental professionals. The present device has the tip structure enclosed within a sealed body 36 made from an autoclavable material that is able to withstand high temperature autoclaving, such as above 121° C, thus making the entire tip structure, including the light-emitting device or engine therein, autoclavable as well.

In one embodiment, the autoclavable body 36 is formed of a suitable metal, such as stainless steel. Alternatively, the body 36 might be formed of a ceramic, glass, or porcelain material that is able to withstand the temperatures associated with autoclaving. Generally, the body 36 will be formed to a suitable shape in conjunction with the heat sink 32 and insulation material 34. For example, the heat sink 32 and insulation material 34 might be formed and the body 36 then formed by coating with the ceramic, glass porcelain, polymeric, or other autoclavable material. In the embodiment illustrated in the figures, the tip structure 14 is appropriately curved from manipulation at a curing site, such as the mouth of a patient, and thus, the body 36 is formed in a curved fashion as well.

Coupled at the distal end of the heat sink 32 is a light-emitting device, or light-emitting engine 40. Such light-emitting devices may include one or more LED elements that are known for curing light-curable compounds, such as dental compounds, and are available from various manufacturers. High power LED elements are one suitable type of elements for the inventive device. For example, a high-power dental LED might be used. The light-emitting engine might use a single LED element or a plurality of elements in an array. Generally, for curing purposes, the light-emitting device will emit a light in a particular desired wavelength for curing a light-curable compound. For various dental compounds, a suitable light is in the wavelength range of 370 - 500 nanometers, or the blue light range. For other uses of the inventive light, such as for examination of the oral regions to detect caries, illuminate areas, and provide cancer screening, other wavelengths might be used.

However, in accordance with another feature, various different tip structures 14 may be readily removed and inserted into the housing 12 so that multiple different tip structures might be utilized with a single housing 12. To that end, the light-emitting devices of the various tip structures might be directed to other applications, such as to whiten teeth, or for illumination within the mouth of a patient, but would still be operated with the same housing 12 and its controls. As such, the present invention is not limited to a specific type of lighting device or use, and various different tip structures 14 might be utilized with light-emitting devices that emit light in an appropriate range of wavelengths for different uses, such as curing, whitening, illuminating, screening, etc.

Such light-emitting devices or light engine 40 generally include a base or substrate 42 that supports one or more light-emitting structures, or semi-conductor junctions, such as in the form of light-emitting diodes or LEDs. A single light-emitting structure might be utilized or an array of structures might be arranged on substrate 42 for providing device 40, depending upon the power of the structures or elements. High power LED elements may be used for example. The light-emitting device 40 is able to withstand high temperatures, and thus, utilizes high-temperature structures, or LED's. Substrate 42 is adhered directly to the distal end of heat sink 32 utilizing a high-temperature adhesive or cement. The direct coupling of the light-emitting device 40 to the heat sink 32 provides optimum thermal coupling for removal of the heat generated by the light-emitting structures 44 or substrate 42.

To seal the distal end 24 of housing 36, a glass window 46 or other transparent element is solder-sealed around its periphery to housing 36, as shown in Figures 2 and 3. The transparent element is configured to allow light to pass out of the distal end of the housing. To that end, the glass window 46 might include metalized portions around its periphery for proper solder-sealing to the housing 36 utilizing a high-temperature solder, or other appropriate high-temperature adhesive. Generally, the light-emitting device 40 operates with a lens 48 over the LEDs or other light-emitting structures in order to focus the light from those structures. A window 46 is illustrated in Figure 2. Alternatively, a separate lens 48 might be sealed to the end of the housing 36 instead of a window 46. The lens 48 may be appropriately shaped for focusing light from light-emitting device 40. For example, a total internal reflective (TIR) lens might be used, as discussed further hereinbelow for the lens 48.

To power the light-emitting device 40, the shown embodiment utilizes high-temperature flexible circuits, or flex circuits 50, 52. The flex circuits extend generally along the inside of the tip structure proximate the heat sink 32. The flex circuits are flexible, and thus, may follow the contour or shape of the heat sink 32. In one embodiment, suitable traces or channels might be formed in the heat sink 32 for placement of the flex circuits 50, 52. The flex circuits 50, 52, in turn, couple to a ceramic end cap 54, with suitable electrically-conductive elements, such as traces, thereon for coupling to the flex circuits, and ultimately to a power supply and control circuits, as discussed further below.

Referring now to Figure 2A, the proximal end 22 of the tip structure 14, and particularly the proximal end of housing 36, is sealed utilizing a ceramic end cap 54 that has rotational circuit traces 56, 58 formed therein, as illustrated in Figure 5. Specifically, in one particular feature of the embodiment, the tip structure 14 is rotatably coupled with housing 12. To facilitate such rotation, while maintaining the delivery of electrical signals to the light-emitting device 40, device 10 incorporates circular electrically-conductive elements or circuit traces 56, 58 formed on or in the end cap 54. As illustrated in Figure 5, the circuit traces 56, 58 generally follow the shape of the end cap, and have a generally circular shape. Furthermore, end cap 54 has an appropriate center opening 60 formed therein for passage of the heat sink 32, as illustrated in Figure 2A. As illustrated in Figure 2A, the innermost circuit trace 56 is illustrated is being electrically-coupled to the flex circuit 50. Similarly, the outer circuit trace 58 on the end cap 54 is coupled with flex circuit 52. End cap 54 may be a ceramic end cap of a suitable ceramic material, such as aluminum oxide. The ceramic cap may be adhered to the body 36. If the body is metal, the edge of ceramic cap 54 may be metalized for soldering the cap to the end of the body. Alternatively, if the body is made from glass, a suitable high-temperature adhesive might be utilized to couple the end cap to the glass body.

As illustrated in Figures 2A and 5, the metal traces 56, 58 are formed through end cap 54 to present a connection for the flex circuits at the distal end of the tip structure. When coupled with or plugged into housing 12, as illustrated in Figure 2A, the flex circuits 50, 52 via the ceramic end cap 54 are coupled to a suitable power supply circuit and controls. Specifically, spring contacts 62, 64 are mounted at the end of housing 12 that interfaces with tip structure 14. Those spring contacts 62, 64 are coupled through appropriate connections or circuits 66, 68 back to a suitable power supply circuit 28. The supplied power may then be controlled via suitable control circuit 16, such as to control the intensity of the light-emitting device, the duration of its illumination, and various other parameters associated with the operational modes of device 10. Housing 12 contains suitable control circuitry 16 and a power supply circuit 28, along with the various electrical connections/circuits 66, 68 for powering the tip structure 14 and the light-emitting device 40 at its distal end. Power supply circuit 28, through contacts 70 may be coupled to an external supply of power, such as an AC source or a DC source, for charging elements of the power supply. For example, as is illustrated in Figure 1A, a base 27 might hold or dock device 10 for recharging purposes. In one embodiment, the power supply circuit includes rechargeable supply elements, such as a battery, which may be charged and removed from the external power source to be manipulated by an operator. In an alternative embodiment, as discussed below with respect to Figure 4, an ultracapacitor element or circuit might be utilized to provide the desired power for the light-emitting device 40. Housing 12 may be formed of any suitable material, such as plastic or metal, or some other rigid material.

As illustrated in Figure 3, when the tip structure 14 is coupled to housing 12, the contacts 62, 64 engage the circuit elements or traces 56, 58 respectively in the end of the tip structure. This electronically couples the light-emitting device with the power supply circuit. Because of the unique circular pattern of the traces, the tip structure 14 may be rotated in a range of 0° - 360°, while the contacts 62, 64 still maintain connection to the traces 56, 58. Alternatively, the circular conductive element might only be contacted over some circular range less than 360°, but still allow at least partial rotation. In that way, the tip structure may be rotated without jeopardizing the electrical connection between the housing 12 and the tip structure 14. Although the electrically-conductive elements 56, 58 are illustrated as formed on the tip structure and the contact elements 62, 64, as positioned on the housing, their relative position might be reversed with elements 56, 58 on housing 12 and elements 62, 64 on tip structure 14. That is, the electrically-conductive elements or traces 56, 58 and contact elements 62, 64 may be positioned on either of the opposing housing and tip structure to pass

power between the two. In an alternative embodiment, alternate pins and sockets might be used between the housing and tip structure to electrically couple the light-emitting device and power supply circuit.

At the same time, the proximal end of the heat sink 32 engages a suitable channel 80 formed in housing 12. The channel 80 is formed by an additional or secondary heat sink structure or element 82, which is preferably formed of a suitable metal, such as aluminum. In addition to the channel 80, the heat sink 82 includes a reservoir portion 84, which contains additional heat sink material. That reservoir portion might be all metal to form a metal heat sink. In accordance with one embodiment, the reservoir portion 84 might be made of metal, but then contains an amount of phase change material 86. Phase change material absorbs the heat from the secondary heat sink structure 82, and changes phase upon such absorption. For example, one suitable phase change material might be a paraffin wax that melts as it absorbs heat. This allows a suitable delay in the temperature rise of the light-emitting device 40 to provide a safe temperature level for the light-emitting device and the overall tip structure during normal usage. Other phase change materials might also be contained within the reservoir portion 84 of the secondary heat sink structure 82, and thus, the phase change material is not limited to a particular phase change material 86.

As illustrated in Figure 3, when the tip structure 14 is plugged into, or otherwise coupled to or engaged with, housing 12, the heat sink 32 engages the secondary heat sink structure 82 such that the end of the heat sink 32 is inserted into channel 80 to provide direct thermal connection or coupling between the heat sink 32 and the secondary heat sink structure 82. In that way, the metal of the secondary heat sink structure 82 may absorb the heat conducted by heat sink 32. If the reservoir portion 84 is simply solid metal or filled with a metal material, that metal would absorb heat, and thus, keep the temperature of the light-emitting device at a suitable operating point. Alternatively, if the phase change material 86 fills reservoir 84, the phase change material may melt in its absorption of heat, and thus, change phase to keep the operating point at a suitably low temperature. The circuits 66, 68 are high temperature circuits, and thus, will be suitable in their proximity to the secondary heat sink structure 82. Furthermore, a jacket of insulation 88 might surround a proportion of the secondary heat sink structure 82, such as the reservoir portion 84, and may also surround suitable electronic elements, such as the power supply circuit 28, and portions of the contacts 70 in order to protect them from the heat of the second heat sink structure 82.

Solid-liquid phase change materials absorb heat, and their temperature rises to a point where they change phase (their melting point). The materials then absorb additional amounts of heat without getting significantly hotter. When the ambient temperature in the reservoir provided by the secondary heat sink drops, the phase change material 86 solidifies, and thus, releases its stored heat. Therefore, the phase change material absorbs and emits heat while maintaining a generally constant temperature, which is desirable for the hand-held housing 12.

Another suitable phase change material is paraffin wax loaded with carbon. Once the heat sink engages with the bore hole, or channel 80 of the external heat sink, suitable thermal conduction is achieved.

The spring-loaded nature of the spring contacts 62, 64 provides a consistent and robust electrical connection between housing 12 and the tip structure 14.

Turning to Figure 4, in accordance with another embodiment, the power supply circuit 28 incorporates one or more ultracapacitors or super capacitors to provide the power for supplying the light-emitting device in the tip structure 14. The one or more ultracapacitors 90 could be utilized to replace batteries in the power supply circuit 28. The ultracapacitors provide high-energy storage, and are able to deliver power instantly when called upon, such as to power the light-emitting device. The ultracapacitors also charge very rapidly, sometimes in seconds, using the charging or charger circuits described herein. They can also be used to provide a necessary sudden burst of energy for applications of the device 10. The rapid charging time provided by the power supply circuit 28 provides quick-charge applications, and eliminates the need for rechargeable batteries, which may require hours to fully charge. Furthermore, ultracapacitors have greater useful life. While a NiMH battery might be charged 500 cycles, or a Li-Ion battery 300 cycles, the present device uses ultracapacitors that might be charged 500,000 cycles. Furthermore, such ultracapacitors that are charged and discharged as described herein do not have a memory (like battery units), have a reduced weight and cost, and do not yield hazardous waste upon disposal. For example, NiMH and Li-Ion batteries weigh significantly more on average than ultracapacitors.

A device 10 may be coupled to a suitable external power source, such as in a power base or dock 27 with sufficient contacts to engage the contacts 70 of device 10 (Figure 1A). The ultracapacitors 90 may be charged and then discharged over a series of use cycles, such as curing cycles, for the device 10. The device may then be replaced into its charging base, or dock, to recharge the ultracapacitor. Generally, the ultracapacitor elements will not need replacement during the lifetime of the device 10, as would batteries. Since the ultracapacitors 90 charge very rapidly, the down time between charging cycles for a device 10 is very short. For example, while a NiMH battery or Li-Ion battery might take around 2.5 hours to charge fully, an ultracapacitor, as charged in accordance with the circuits described herein, might be fully charged in 15 seconds.

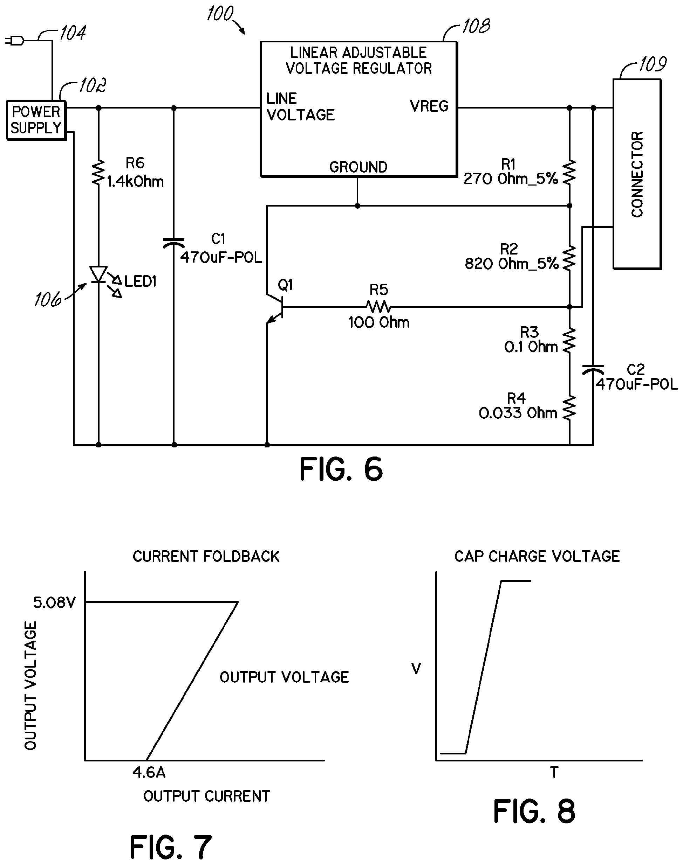

Figure 6 is a circuit schematic of one possible charging or charger circuit to be utilized within the base unit or dock 27 for charging device 10 and particularly for charging the ultracapacitors that would be provided in one such embodiment of the invention. Charger circuit 100 includes a power supply circuit/component 102 that provides suitable DC power to the circuit. For example, the power supply 102 may be coupled with an appropriate AC power cord 104 for plugging into an AC outlet, and provides DC power within the range of 5-24 Volts, for example. An indicator LED 106 might be used to provide an indication that the base 27 has power. (See Figure 1A.) As shown in Figure 1A, base 27 might also include indicators 111, 113 for indicating that device 10 is charging or fully charged. Circuit 100 is configured to operate as a current source in the form of a current foldback circuit, in accordance with one embodiment. The current foldback circuit 100 is utilized to charge the ultracapacitor power supply circuit 28 of the invention, and provides a desirable rapid charge of the ultracapacitor elements 90 that differs from over how the capacitor might be charged generally. Specifically, in one embodiment, a current source is utilized to charge the ultracapacitor elements 90.

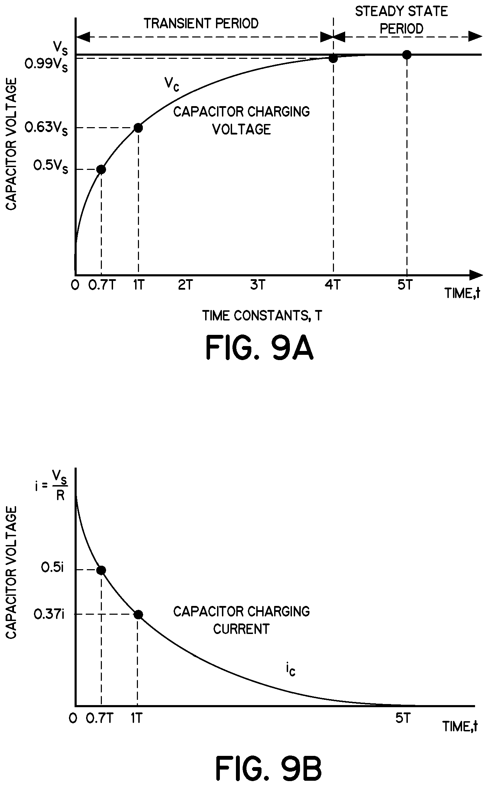

Figures 9A and 9B illustrate typical charge and discharge curves for a regular capacitor. For example, Figure 9A shows a charge curve, and Figure 9B shows a discharge curve. In general capacitor theory, the charge and discharge curves of a capacitor are considered to be exponential, as illustrated in Figures 9A and 9B. A single time constant, or 1T, indicates the amount of time that it takes for a capacitor to charge generally to around 63% of its full charge. The time for a full charge is expressed as 5T, as may be seen in Figure 9A. Figure 9B shows the discharge curve that is also exponential, wherein the time constant 1T is indicative of the time it takes to discharge to about 37% of its full charge.

However, with the present device, it is necessary to charge ultracapacitors faster than traditional charging for the purposes of efficient use by an operator of the device 10. That is, for certain uses, such as for curing dental compounds, it is desirable to charge the ultracapacitor very rapidly to avoid waiting and downtime in the curing process. In accordance with one embodiment as shown in Figure 6, a current source power supply circuit 100 is used to charge the ultracapacitor at the desired rate. As illustrated in Figure 8, this provides a rapid, generally non-exponential charge function for the ultracapacitor. Figure 8 illustrates a charging ultracapacitor voltage versus time for the charger circuit of Figure 6, and it may be seen that a very steep linear slope and charging is provided by the invention for providing a linear change function, as shown in Figure 6. This provides significant advantages.

Returning again to Figure 6, circuit 100 acts as a linear power supply with a current foldback function. Figure 7 illustrates a curve associated with the operation of a current foldback supply, as illustrated in Figure 6. When the power supply is connected to be charged, such as when device 10 is placed into the charging base 27, current is constant until the ultracapacitors are fully charged, and then there is effectively little or no output current to the ultracapacitors.

Charger circuit 100 utilizes a linear adjustable voltage regulator 108, such as an LM1084IT regulator available from National Semi-Conductor. In circuit 100, regulator 108 is a standard linear regulator where the control feedback signal is controlled by the transistor Q1 voltage Vbe. The current, through the charging ultracapacitor elements coupled to a connector 109, develops a voltage across sensing resistors (R3/R4). When the voltage across the sensing resistors is equal to the Vbe of transistor Q1 (0.6V), the transistor turns ON, and forces the linear voltage regulator 108 to foldback and limit the current generally to a value of I = 0.6V/R3+R4. Once the ultracapacitors are fully charged, the current is generally or effectively 0 Amps. The capacitor charge time with such a circuit acting as a current source is illustrated in Figure 8 as approximately T = C(V/I).

The constant power charging topology as disclosed herein, generally transfers all the available power from the charging source or base into the energy storage ultracapacitors. The straight linear constant current or power delivery can generally provide a recharge of the power supply of the invention faster than 1T versus having to wait up to 5T, as with conventional charging of a capacitor. Effectively, the practical charge time will be set by the maximum peak current that the ultracapacitors can accept.

While Figure 6 illustrates a charger circuit 100 that is a linear constant current foldback power supply, another alternative embodiment for fast ultracapacitor charging is to use a switched mode current mode power supply with pulse limit and pulse-by-pulse limit. In another embodiment, a lithium Ion (Li-Ion) battery charger might be utilized. Alternatively, a nickel metal hydride (NiMH) battery charger might also be utilized for the purposes of charging the ultracapacitors.

Various different ultracapacitors might be utilized. In one embodiment, the ultracapacitor element or elements has a capacity of around 150 Farad. A range of 50-1,000 Farad might be suitable for the purposes of the invention. A multi-layer ultracapacitor might be utilized, such as one from Illinois Capacitor. Alternatively, ultracapacitors made from carbon nanotubes might also be utilized. In still another embodiment, an ultracapacitor made from carbon aerogel might be used. Lithium Ion ultracapacitors might also be utilized and provide significant cycling (e.g., 100,000 cycles) with a very low self-discharge characteristic. Another desirable feature of ultracapacitors is that they may be smaller, thinner, and lighter than conventional power supplies, such as rechargeable batteries.

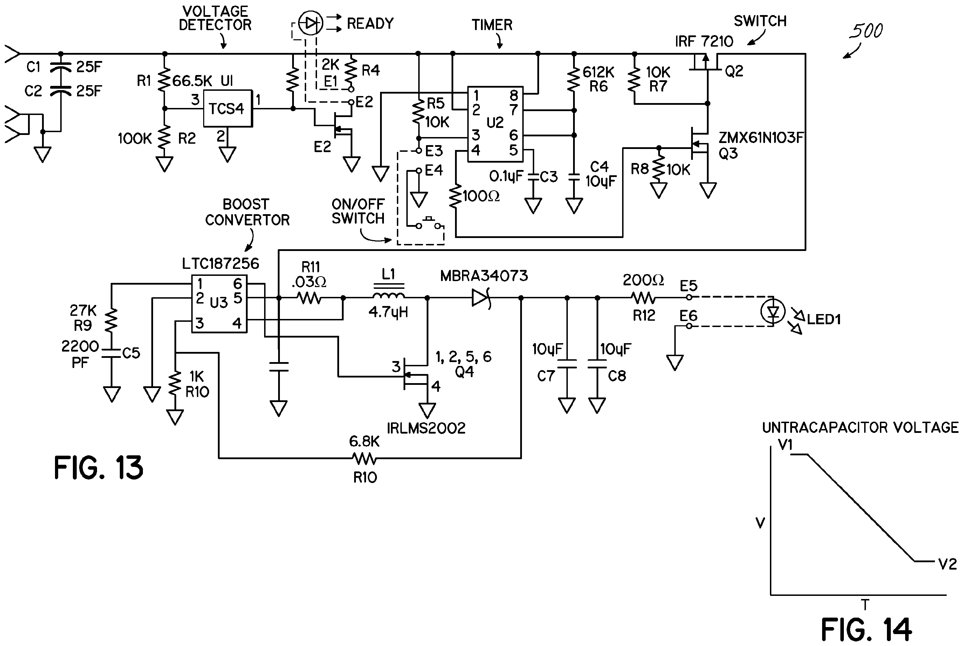

In one embodiment, the device 10 is utilized for curing dental compounds. In such an application, the LEDs that are used for the light device or engine 40 are generally high-power blue LEDs, such as an array of such LEDs. Such devices are generally current devices, and the light output from the LEDs is a direct function of the current provided from the power supply. In accordance with one feature, to maintain a constant light output, the current to the LED elements or array 40 should be constant. A current source may be provided to power the LEDs. That is, the ultracapacitors are discharged as a current source. To that end a desirable discharge function for the ultracapacitors of the invention is a straight linear function, as shown in Figure 14, where the discharge time would be:

$$T_{discharge} = C(V1-V2)/I$$

Where V1 is the full charge voltage and V2 is the lowest operating voltage.

In one embodiment, the power supply to drive the one or more LED elements or an array making up light engine 40 could be a boost pulse width modulated (PWM) current source, or a buck PWM current source. Alternatively, a buck-boost PWM current source might be utilized. Also, a flyback current source or SEPIC current source might be used as discussed below. A buck-boost topology would provide a desirable long run time (discharge time) for device 10 by providing power to the one or more LED elements when the ultracapacitors are fully charged and the voltage may be higher than the forward voltage necessary for the LED. Such a topology then also provides power to the LED when the charge on the ultracapacitors due to discharge is lower than the forward voltage for the LED. In one embodiment, using two 100 F ultracapacitors, 30-40 discharge curing cycles of 10 second each might be achieved on a single charge, for example.

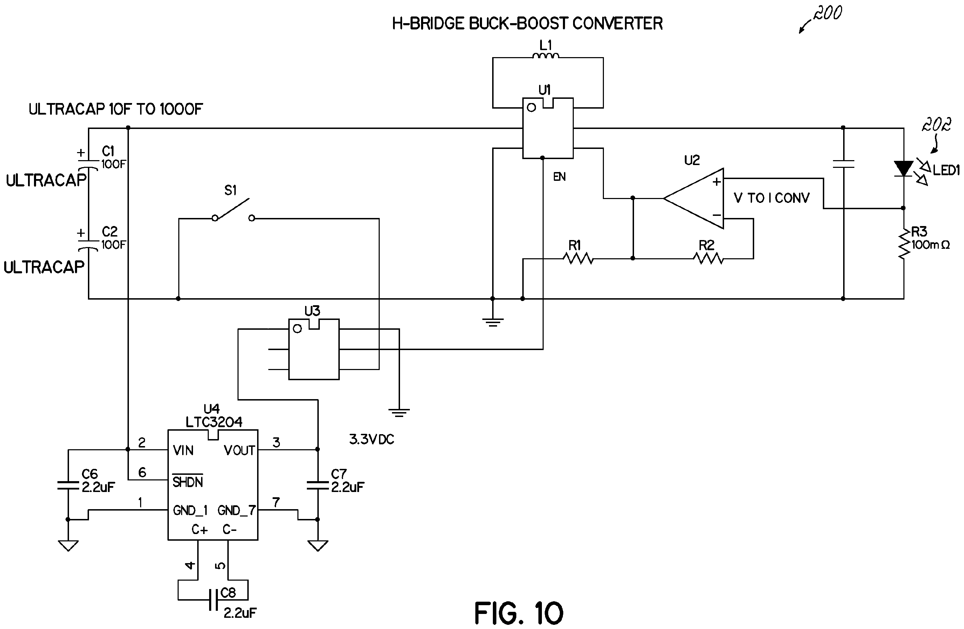

Figure 10 illustrates one embodiment of a suitable buck-boost converter 200. Figure 10 illustrates two ultracapacitors C1, C2. Alternatively, a single ultracapacitor might be utilized. Still further, more than two ultracapacitors might be utilized, as discussed below. As such, there is no limitation to any particular number of ultracapacitors that might be utilized in the power supply.

Power supply circuit 200 utilizes a PWM integrated circuit U1. U1 is coupled with inductor L1 and provides power to one or more LEDs. Figure 10 illustrates symbolically a single LED1, however, such a symbol also covers an array of multiple LEDs. PWM circuit U1 provides power through a current sensing resistor R3. The power supply might be controlled through an ON/OFF switch S1 coupled with a suitable control circuit U3, which provides ON/OFF control and timing functionality for the operation of the LEDs and the light device. Circuit U4 provides a local power supply for the U3 control circuit.

In order to control U1 as a current source, circuit U2, such as an operational amplifier, converts the current through the LED, sensed by resistor R3, into a feedback voltage. The feedback voltage is used to control the U1 circuit as a current source, as desired. Resistors R1 and R2 set the voltage feedback level to the U2 circuit.

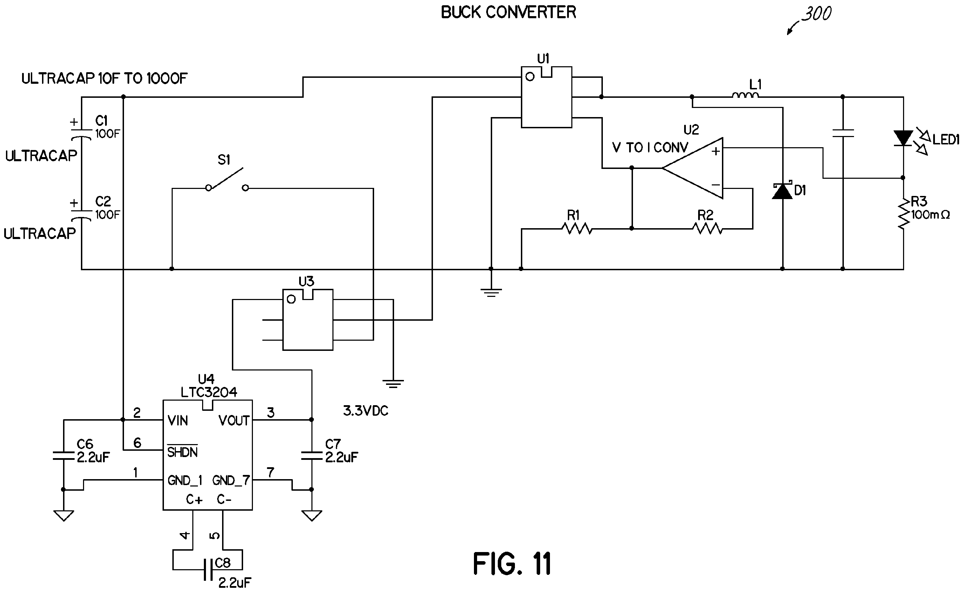

In an alternative embodiment, a buck converter power supply 300 might be utilized to provide a constant power load on the ultracapacitors and provide a constant current to any LED element. A buck converter topology, as illustrated in Figure 11, somewhat resembles the buck-boost topology, as set forth in Figure 10 with like elements sharing like reference numerals. The power path from the PWM circuit U1 includes a Schottky diode element D1 and inductor L1, as illustrated. The buck converter circuit 300 might be utilized if the LED light engine voltage requirement is less than the ultracapacitor stack voltage.

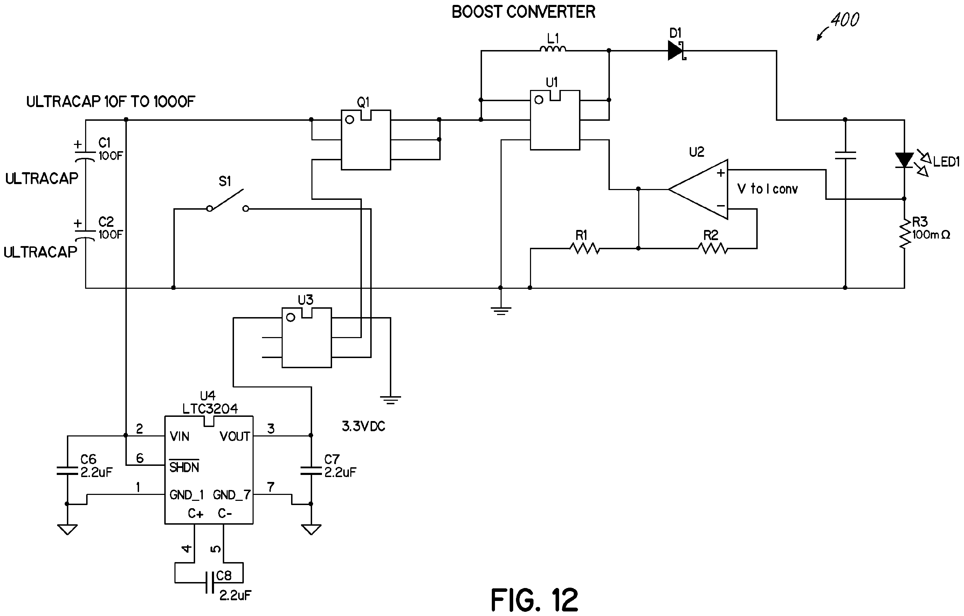

Alternatively, if the LED light engine voltage requirement is greater than the ultracapacitor stack voltage, a boost converter topology might be utilized. For example, the boost converter circuit 400, as illustrated in Figure 12, might be used to drive the LED light engine. Figure 12 resembles Figure 10, with like reference numerals being utilized for like elements. In the boost topology of circuit 400, a solid state switch Q1 provides the functionality to turn the power supply ON/OFF based on the control of switch S1. Such a switch Q1 might also be desirable for circuits 200 and 300 as well. Schottky diode D1 and inductor element L1 are coupled appropriately for the boost converter operation.

In the circuits of Figures 10-12, 15, 16, PWM circuit U1 can be a standard buck, boost, or buck-boost PWM circuit that can operate at low voltages, such as from 1.5 Volts to 12 Volts. In each of the five circuits, the U2 circuit element is utilized to control the voltage feedback to the PWM U1 to provide the current source function. The voltage across the R3 element is directly proportional to the current through the LED, and the error amplifier amplifies the small voltage drop across the low Ohm sensing resister R3 to equal the internal PWM reference voltage. The U3 circuit is a control circuit that controls the ON time of the light engine and the shutdown when the ultracapacitor has discharged to a point that is too low for use by the PWM circuit U1. The U3 circuit could be a microprocessor, microcontroller, complex programmable logic device (CPLD), or a simple analog timer, such as a ZSCT1555. The U4 circuit is a charge pump power supply that acts as a low power buck-boost controller, and provides a stable, constant supply voltage to the control circuit during the discharge of the ultracapacitor. The Q1 circuit acts as a solid state switch to disconnect the LED power supply from the ultracapacitors when the power supply is turned OFF. The power circuit 400 illustrated in Figure 12 utilizes the Q1 element. Such a solid state switch Q1 may or may not be necessary with the buck converter of Figure 11 or the buck-boost converter of Figure 10. Inductor element L1 is an electronic element required for the switched power mode power supply (SMPS). The value of L1 could range generally from 1 μH up to 300 μH. The D1 element, as noted above, is a Schottky diode that generally would be utilized for the buck or boost converter configurations of Figures 11 and 12.

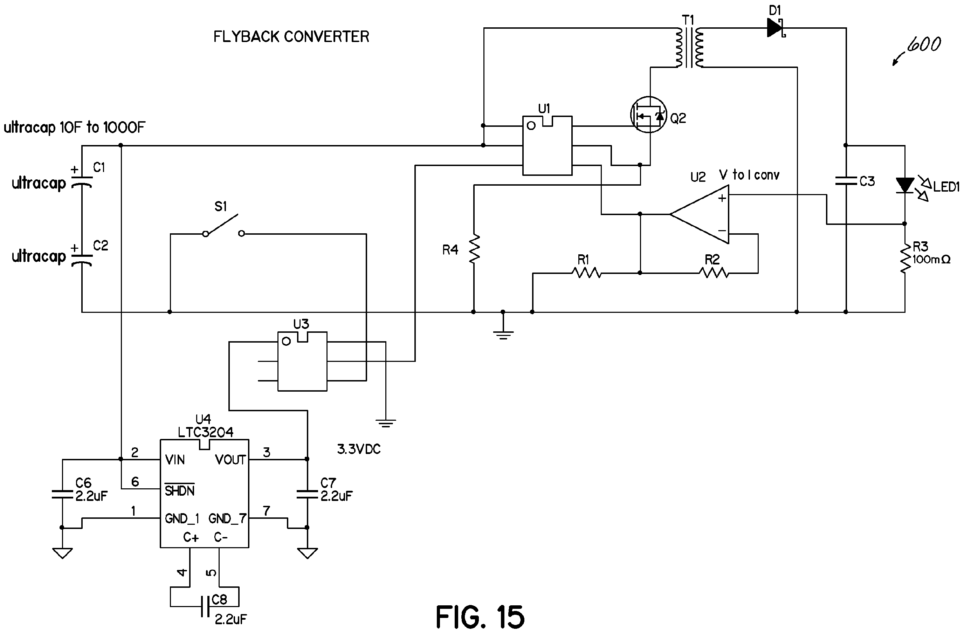

Figure 15 illustrates and alternative current source for powering the LED light engine. Figure 15 illustrates a flyback current source 600, wherein similar elements are used, as noted above, with respect to other embodiments. In Figure 15, T1 indicates a flyback transformer and element Q2 illustrates a flyback switch, wherein resistor R4 is a current limit sensing resistor for switch Q2. In operation, when the switch Q2 is ON, the primary of the transformer T1 is directly connected to the input voltage source. The voltage across the secondary winding is negative, so the diode D1 is reverse-biased (i.e., blocked). The output capacitor supplies energy to the output load, such as LED 1. When the switch is OFF, the energy stored in the transformer is transferred to the output of the converter. The feedback signal from the current sensing resistor R3 is sent back to the PWM circuit U1 to control the LED current.

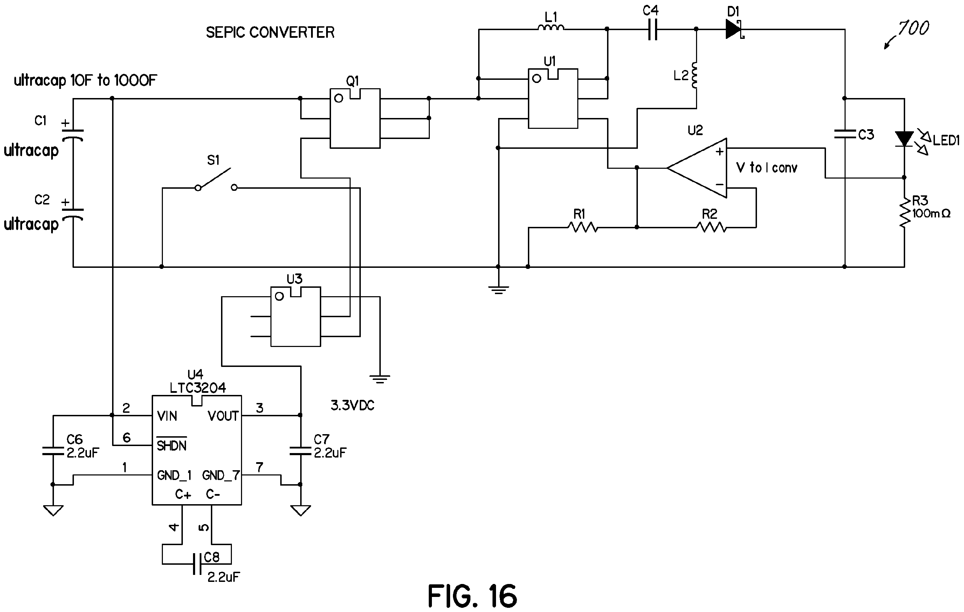

Figure 16 illustrates another alternative current source in the form of a "single-ended primary inductor converter" (SEPIC) converter 700. A SEPIC converter is a type of DC-DC converter that allows the electrical voltage at its output to be greater than, less than, or equal to, that of its input. The output of the SEPIC converter is controlled by the duty cycle of the U1 circuit from the feedback signal from current sense resistor R3 that is sent back to the U1 PWM circuit to control the LED current. Similar references are used in Figure 16 as used in Figures 10-13 and 15. Q1 is a solid state switch that turns the power supply ON/OFF. The split inductors L1 and L2 provide the boost function (L1) and the buck function (L2). Capacitor C4 provides AC coupling in the circuit of Figure 16.

While the various Figures 10-13, 15, 16 illustrate two ultracapacitors C1 and C2 in series, a single ultracapacitor might be utilized, as noted above. Alternatively, the ultracapacitors C1, C2 might be connected together in parallel. Still further, more than two ultracapacitors might be utilized, and they might be coupled together in a series-parallel arrangement to provide the required voltage and power for the light device 10.

In an alternative embodiment, the circuit as illustrated in Figure 13 might be utilized, such as for providing power to lower power LEDs for applications other than curing dental compounds. Circuit 500 in Figure 13 is in the form of a boost converter, which is powered by ultracapacitors C1, C2. A voltage detector portion of the circuit provides power to a "Ready" LED (See Figure 1A) to indicate that the light device 10 is fully charged. An ON/OFF switch portion powers a timer circuit, which drives a solid state switch Q2 to turn the power supply ON and OFF after a selected period of time (e.g., 5 - 40 seconds). A boost converter then provides the necessary power to an LED or LED array as shown.

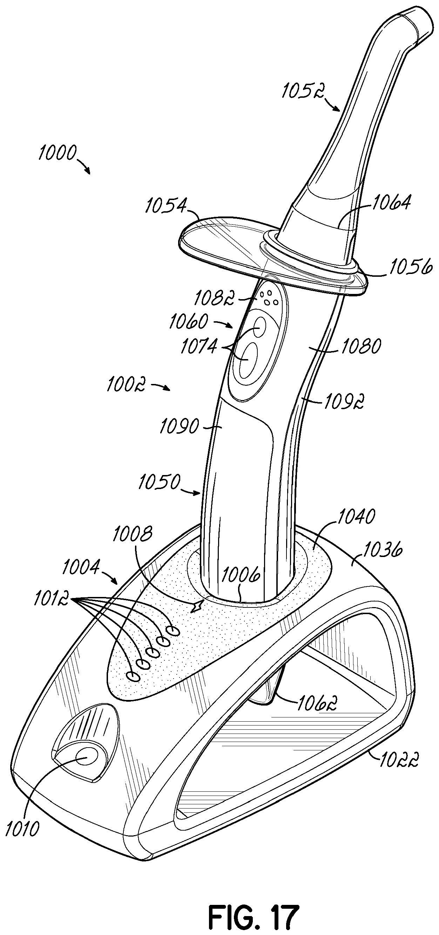

Figure 17 illustrates another embodiment incorporating various of the features disclosed here. Curing light system 1000 incorporates a curing light device 1002 that is shown plugged in a charger dock or base 1004. Charger base 1004, and the charger electronics therein, are coupled by a power connector cord (not shown) to an AC power supply, such as a wall outlet. The power connector cord includes an AC-to-DC converter, including appropriate transformer and inverter circuitry that provides a suitable and usable DC signal, such as a 12-Volt DC signal, to the charger base 1004. Charger base 1004 has an appropriate opening 1006 therein to hold an end of the light device 1002, as shown in Figure 17. The light device may then be readily removed and used, such as for curing a dental compound, in the mouth of a patient. Charger base 1004 is configured to sit on a flat table or countertop surface. The charger base includes an appropriate indicator 1008 that is illuminated for indicating the charging status of a light device.

Charger base 1004 also includes a radiometer sensor for measuring the light output of the light device 1002. The radiometer sensor, as shown in Figure 17, includes an input port 1010, and a plurality of indicator lights 1012. The output end of the light device 1002 may be placed adjacent to the input port 1010, and operated to output a beam of light. A reading by the indicators 1012 provides an indication of the power level of the output of the light device. Generally, light device 1002 will output a power level in the range of 1,100 - 1,800 mW/cm$^2$. The multiple indicators are illuminated in a graded fashion to provide a relative indication of that light output, as discussed below.

Referring to Figure 17, a radiometer sensor 1010 has a plurality of indicator lights 1012 that provide a graded indication of the power of the light generated. In one embodiment, five indicators lights are used as shown in Figure 17. The lights have different colors, and are illuminated in sequence to indicate the intensity of the light generated. To operate the radiometer, the curing time interval for the light is set to a 10 second cycle, as discussed below. Holding the tip over the radiometer sensor 1010 during the curing cycle, the indicator lights will illuminate from the bottom up, providing a reading of the light intensity. The radiometer sensor should be illuminated until the curing cycle is complete. In one embodiment, the bottom two lights are amber in color, and the top three lights are blue in color. In one feature, the indication lights have a minimum number that must be illuminated to indicate the light device is operational for a curing cycle. In accordance with another feature at least one blue light (3 lights total) must be illuminated for a proper cure. The first light is illuminated with an intensity of 750 mW/cm$^2$ and above. The second light is illuminated at 850 mW/cm$^2$ and above. The third light (the first blue light) is illuminated at 950 mW/cm$^2$ and above. The fourth light is illuminated at 1,050 mW/cm$^2$ and above, and the fifth light is illuminated at 1,250 mW/cm$^2$ and

above. Generally, the first four lights will emit a steady glow when lit. The top indicator light is sensitive to the Periodic Level Shifting (PLS) of the light device, as noted below, and that will cause a blinking or flickering effect for the fifth light.

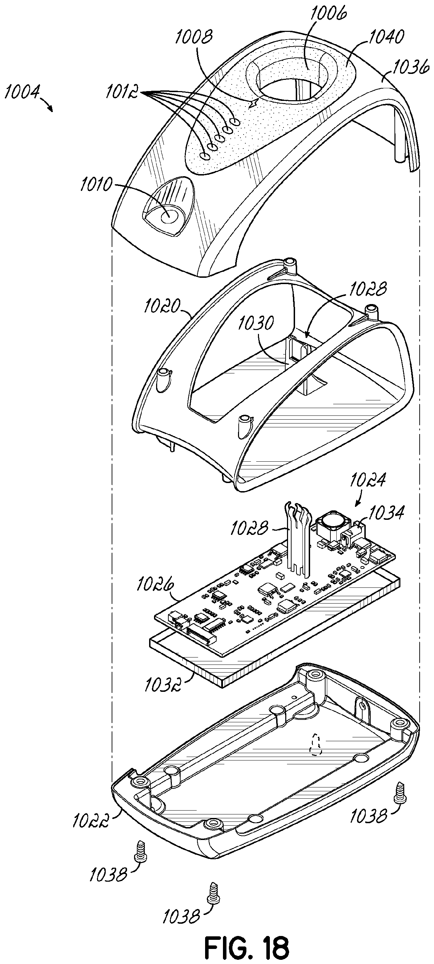

Turning now to Figure 18, an exploded view of the charger base 1004 is shown. Charger base 1004 includes a center portion 1020 formed out of a suitable thermoplastic, such a Valox resin, available from SABIC Innovative Plastics of Pittsfield, Massachusetts. Center portion 1020 sits on a metal base 1022. The metal base is made of a suitable metal, such as a zinc alloy, and weighs 300 - 320 grams, and in one embodiment, approximately 313 grams. The center portion 1020 is coupled to the various 1022 by appropriate fasteners, such as screws. Captured between the center portion and base are charger electronics 1024, which are positioned on an appropriate printed circuit board 1026. The charger electronics includes an upstanding charger plug 1028, which is captured in a suitable upstanding section 1030 of the center portion. Together, the plug and section provide an upstanding charger plug 1028 to be received into the end of the light device 1002 when the light device is seated into the charger base and plugged in, as shown in Figure 17. To provide suitable insulation from metal base 1022, an insulator tray 1032 is positioned beneath the circuit board 1026. The charger electronics include a suitable outlet 1034 for receiving the plug of an AC/DC power cord, and delivering 12 Volts to the charger electronics 1024. A cover 1036 is then placed and appropriately secured to the center portion 1020 to provide the completed charger base 1004. Screw-in rubber feet 1038, which are secured with the metal base 1022, provide suitable engagement with a flat support surface.

A heavy metal base 1022 provides desirable weight to the charger base 1004 to hold the charger base down onto the support surface when the light device 1002 is inserted into and removed from the charger base. This provides the user the ability to readily remove the light device with a single hand, without having to hold down the charger base. The single-handed removal provides a desirable advantage and benefit, and allows the user to readily grab the light device for use with a single hand without upsetting the charger base, or otherwise securing the charger base with the other hand. The center portion 1020 and the cover, as noted, may be formed of a suitable thermoplastic, such as Valox resin. Other portions, such as indicator section 1040, might be formed of other materials, such as Lexan, a polycarbonate material. A person of ordinary skill in the art will understand that suitable materials are used for durability, aesthetics, and other purposes in forming the charger base, as well as the light device.

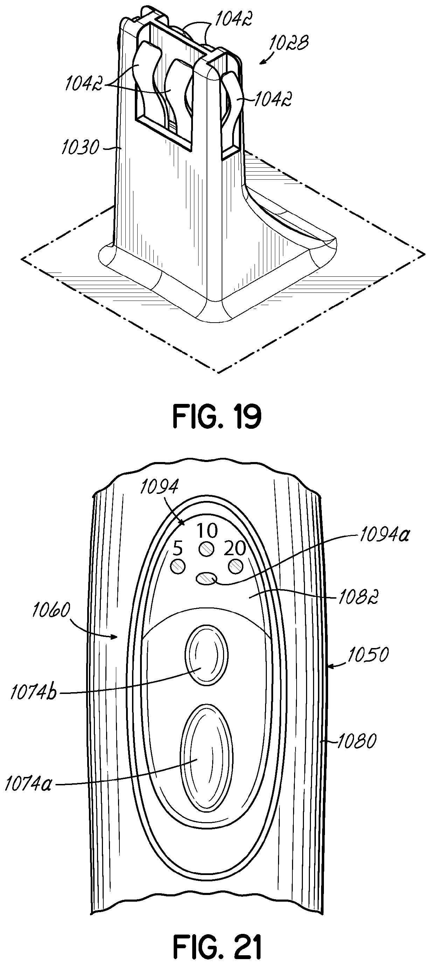

Figure 19 illustrates the upstanding charger plug 1028, which includes suitable charging contacts, such as metal spring-loaded fingers 1042, for providing suitable electrical contact with the light device 1002 when it is plugged in. A socket in the end of the light device receives the upstanding charge plug 1028, as discussed below. The spring-loaded charger contacts exert a force on the counterpart contacts of the plug socket 1081 in the body 150 to hold the device in the charger base and provide a robust and positive electrical contact between the device and charger base. When light device 1002 is plugged into the charger base 1004, indicator 1008 is illuminated to indicate the charging status of the light device. Different color lights indicate different status. If the light is illuminated in one color, the light device is currently charging. When the indicator light changes to another color, the light device is fully charged. In one embodiment, indicator light 1008 will illuminate in an amber color when the light device is charging, and will illuminate in a green color when the light device is fully charged. As discussed further hereinbelow, when the light device is recharged regularly, it will require only 40 seconds of charging for a full recharge. If the power source is fully drained after several days of inactivity, the unit may require up to 70 seconds for a full recharge, but then will again only require around 40 seconds for subsequent recharges.

In addition to the holding force of the spring-loaded contacts 1042, the charger base also provides a friction fit of the device 1002, when it is plugged in for charging. Specifically, a friction fit is presented between the plastic of the upstanding section 1030, and the plastic material of the plug socket 1086 at the base of device body 1050. A 4 to 5 Newton point force will be exerted by the charger base contacts 1042 on the body socket contacts (not shown) of socket 1086 at the contact points. However, the additional friction fit presented by the plastic material of section 1030 and plug socket 1086 adds an additional force on the body for a required manual removal force of approximately 7.8 Newtons. To counteract the force and provide for one-handed removal, the charger base 1004 may provide a weight of approximately 456 grams. In one embodiment, the metal base 1022 weighs around 313 grams, and the other parts and plastic portions provide the rest. To that end, a charger base weight in the range of 425 - 475 grams might be suitable to provide a one-handed removal. This ensures the removal force required to remove the curing light is less than the downward gravity force provided by the charger base.

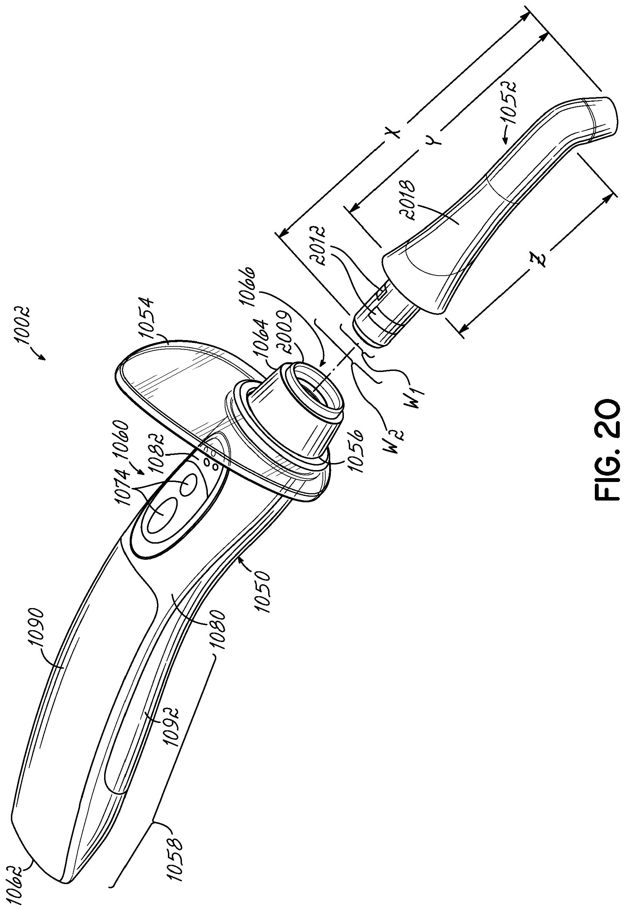

Referring to Figure 20, in accordance with one feature, the curing light device 1002 includes a hand piece or body 1050, and a removable LED light attachment referred to herein as tip 1052. The body is manually manipulated by a user, such as a dentist. The tip is plugged into the body, as illustrated in Figure 20, and may be readily removed for changing or replacing the tip. Tip 1052 may also be rotated as appropriate for positioning the tip and the light therefrom at the curing site or other site. The light device also includes a light shield 1054 that is held onto the body 1050 by a rubber grommet 1056. The light shield is made of a suitable plastic material, such as an orange plastic, and is optically clear.

In accordance with another feature, the rubber grommet provides an easy removal of the shield, as desired from the body 1050, and also facilitates easy rotation of the shield as desired, such as when the tip is rotated.

The hand piece or body 1050 has a handle section 1058 to be grasped by a user, and a suitable control and indicator section 1060 that may be manually manipulated, such as by the fingers of a user, when they are holding the light device body at the handle section. The curing light device body includes a proximal end 1062, which includes a socket for plugging into the charger base, and a distal end 1064, which also includes a socket 1066 for receiving the removable tip 1052.

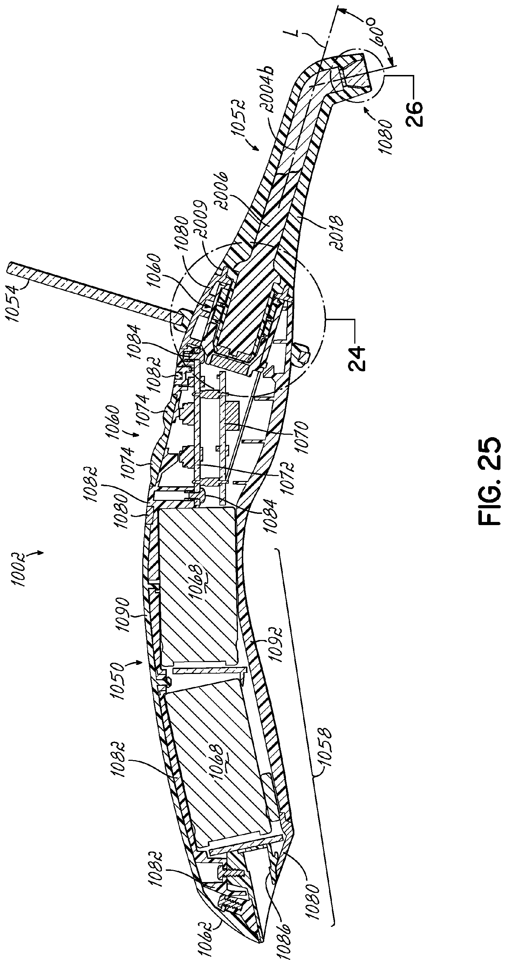

Figure 25 illustrates a cross-sectional view of curing light device 1002 showing the various components of the light device, as well as sections of the body 1050. Body 1050 encloses a power supply for the light device in the form of a plurality of ultracapacitors 1068. Light device body 1050 also encloses suitable power discharge electronics and control electronics that are positioned appropriately on a pair of printed circuit boards 1070, 1072. Generally, the ultracapacitors 1068 are contained in the handle section 1058, while the electronics 1070, 1072, are proximate the control section 1060, so that individual control buttons 1074 can interface with the electronics, and may be used to control the light device, such as to start a curing cycle.

Referring to Figures 20 and 25, body 1050 forms a housing for components of the device and includes an internal frame 1080, which forms a rigid structure and base for the body. The frame also provides a suitable structure for holding the socket 1066 that receives tip 1052. Frame 1080 is made of a suitable rigid material, such as aluminum. The body also includes an upper subsupport 1082 that cooperates with the frame, and provides structure for securing the boards of circuits 1070, 1072, such as with screws 1084. The sub support 1082 also supports a plug socket 1086 at the proximal end 1062 of the body, as illustrated in Figure 25. The socket 1086 receives the upstanding plug 1028 and contacts 1042, when the curing light device is plugged into the base charger, and the socket includes appropriate metal contacts (not shown) to interface with the spring contacts 1042 of the plug in the charger base to deliver power to the ultracapacitors and light device. An upper cover 1090 and a lower cover 1092 operate with the frame and upper subsupport 1082 for forming the hand piece body 1050. The upper subsupport 1082 and covers 1090, 1092 may be formed of a suitable thermoplastic material, such a Valox resin and/or GLSVersaFlex TPE Alloy, available from PolyOne GLS of Avon Lake, Ohio. A person of ordinary skill in the art will understand that the body 1050 might be formed in various different ways, and thus, is not limited specifically to the materials or arrangement of the various sections and body elements.

The subsupport 1082 that couples with frame 1080 defines the control section 1060, as illustrated in Figure 21. The control section includes operational buttons 1074a, 1074b for turning the device ON and selecting an operational mode, as well as indicator lights 1094, such as for indicating the length of the cure process that has been selected, as discussed further hereinbelow.

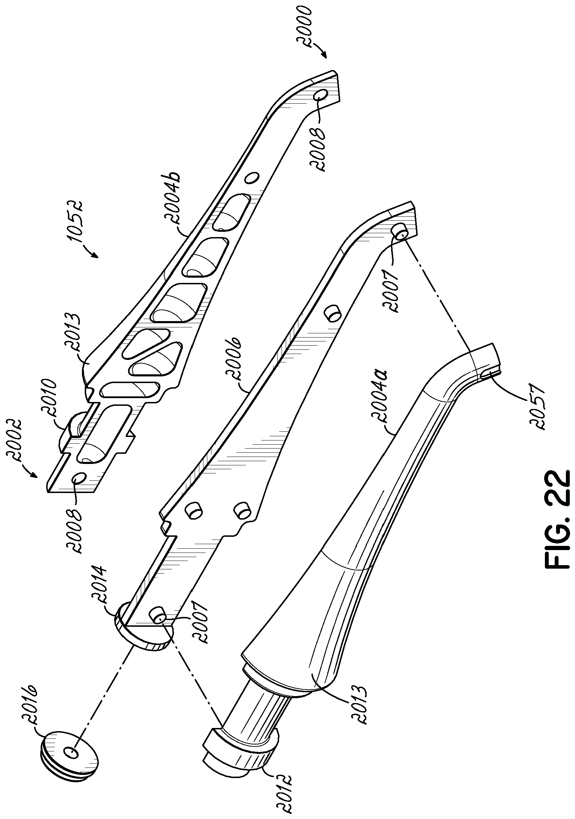

Figure 22 illustrates one embodiment of the removable tip 1052 shown in the exploded view. Specifically, Figure 22 illustrates the structure of removable tip that holds, cools, and supports the LED light engine on the distal end 2000 of the tip. The proximal end 2002 of the tip then plugs into an appropriate socket 1066, as illustrated in Figure 20.

Tip 1052 includes two core or body elements 2004a, 2004b, which fit together in a clam-shell fashion, as illustrated. The body elements are formed of an electrically and thermally conductive material. In one embodiment, the elements 2004a, 2004b are formed of copper to provide both the conduction of electrical energy to the light engine at the distal end 2000, and to also provide thermal conduction for removing and dissipating heat that is generated when the light engine is operated. As shown in Figure 22, an insulator plate or element 2006 is positioned between the conductive body elements 2004a, 2004b. Therefore, the body elements are electrically isolated, and may act as the positive and negative conductors, as desired below, to deliver power to the light engine of the device. The insulator element is in the form of a plate structure, and generally has the same cross-sectional shape as the body elements, as shown in Figure 22. That insulator element incorporates alignment structures 2007 that cooperate with alignment apertures 2008 in the body elements 2004a, 2004b for proper alignment to form the finished tip 1052, as illustrated in Figure 20, for example. The core or body elements as shown are solid out near the distal end 2000, but are also hollowed out along portions of their length, as illustrated. The proximal ends each include integral electrical contact structures 2010, 2012 that are formed with the body elements and are positioned along the length of the tip to be longitudinally offset from each other. The electrical contact structures 2010, 2012 provide electrical contact with a power source (ultracapacitors) for the tip, in order to provide electrical power out to the light engine on the distal end 2000 of the tip, as discussed further hereinbelow. In the complete tip, as shown in Figure 20, the offset contact structures 2010, 2012 provide longitudinally separated and electrically isolated contact points, so that positive and negative contacts presented in the socket 1066, and coupled with the power supply, may make appropriate electrical contact for providing power to the light engine. The insulator element 2006 keeps the body elements 2004a, 2004b electrically insulated from each other, so that both the positive and negative positions of the signals from the power supply may be delivered from the body 1050 out to the distal end of the tip and the light engine. The insulator element includes a flat base 2014 that abuts with the ends of the body elements 2004a, 2004b. Copper body elements 2004a, 2004b might be appropriately plated, such as with a nickel plating. A steel disk 2016 is also abutted against the base 2014. The steel disk 2016 might also be plated with the nickel plating, and provides part of the securement apparatus for the tip 1052, to secure the tip in socket 1066, as discussed below.

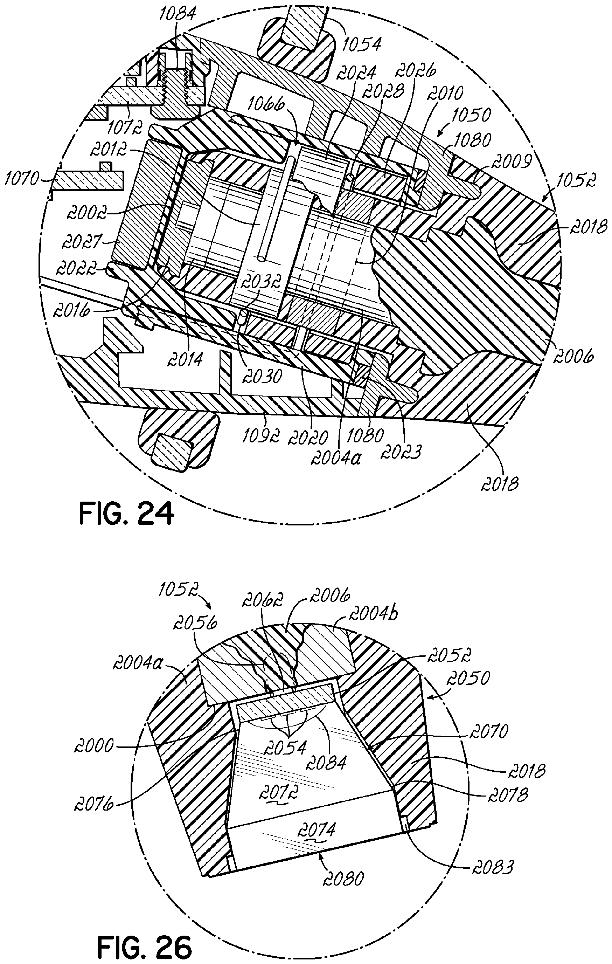

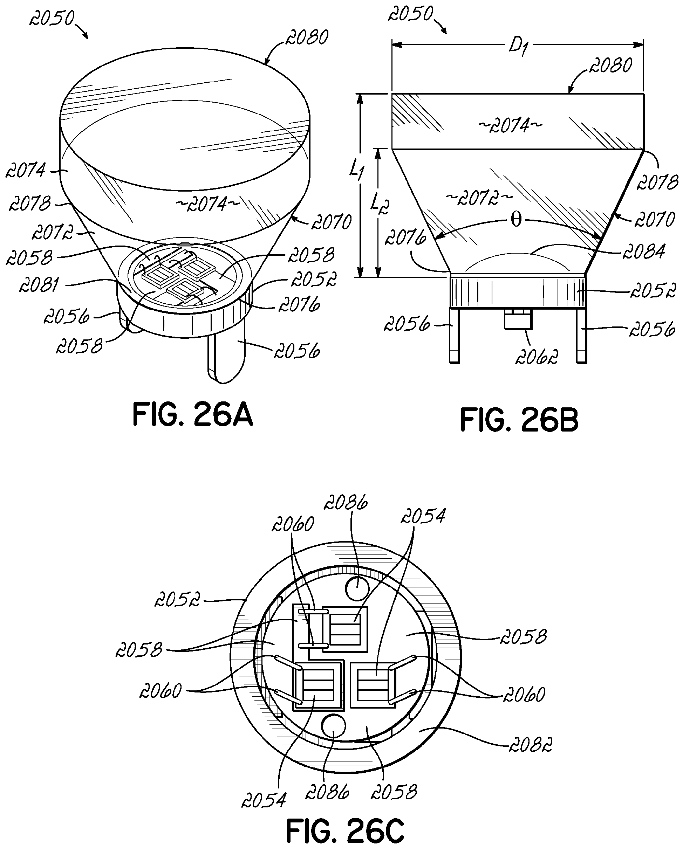

Once the tip is assembled as shown in Figure 22, the entire body of the tip is appropriately covered with a suitable thermoplastic material 2018, such as Valox resin. (See Figure 25.) A plastic material layer 2018 will generally follow the surface contours of the elements making up the tip, while still leaving the contact structures 2010, 2012 exposed for proper electrical contact, as shown in Figure 20. As shown in Figure 26, and discussed further hereinbelow, the light engine utilized in the curing light device 1002 is coupled to the distal end 2000 of the tip 1052.

The tip 1052 might be dimensioned for a length X end to end of approximately 4.10 inches, a length Y of approximately 3.22 inches, and a length Z of approximately 2.58 inches. The width of the plug end of the tip W might be approximately 0.34 inches, and the width $W_2$ approximately 0.94 inches, as shown in Figure 20. This provides a stable base 2013 to tip 1052 that is wider than the proximal end 2002. Referring to Figure 25, the distal end 2000 of the tip might be angled approximately 60° from a longitudinal axis L of the tip.

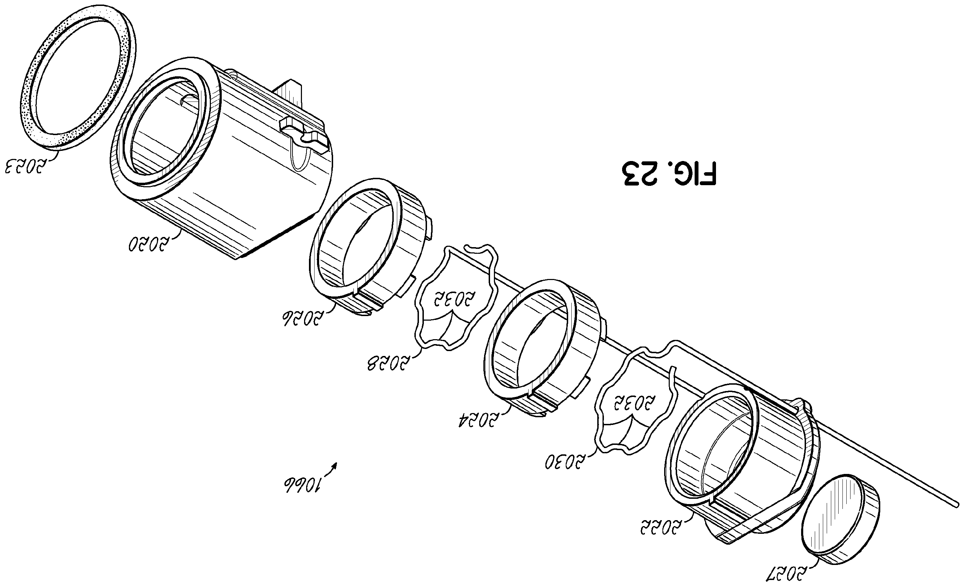

Turning now to Figure 23, an exploded view of the socket 1066 that is positioned at the distal end 1064 of body 1050 is shown. The socket incorporates a housing 2020, a cap 2022 that engages the housing and holds a plurality of spacers 2024, 2026 therebetween. Electrical spring contacts 2028 are appropriately held between the spacers and are aligned to physically contact the contact structures 2010, 2012 in the tip 1052 when the tip is plugged into and secured in the socket 1066. To that end, the electrical contacts are in the form of shaped spring contacts that generally surround the inside of the socket roughly 360°. The shaped spring contacts create a plurality of shoulders 2032 that provide desirable physical and electrical contact with the contact structures 2010, 2012 of the tip. As illustrated in Figure 24, the contacts 2028 and 2030 are spaced along the length of the socket to coincide with the longitudinal offset spacing of the contact structures 2010 and 2012 at the proximal end 2002 of the tip. A gasket 2023 positioned at an end of the socket engages the subsupport 1080, as shown in Figure 24.

In accordance with one feature, the tip 1052 is secured in socket 1066 with a magnetic mechanism. Referring to Figure 24, when the tip 1052 is plugged into the socket 1066, the contact structures 2010 and 2012 each are seated to press against their respective electrical contacts 2028, 2030. More specifically, the contact structures 2010, 2012 abut against the shoulders 2032 of those electrical spring contacts. The contacts 2028, 2030 and structures 2010, 2102 are dimensioned to provide a solid electrical contact all the way around the socket. To hold the tip in place, a magnet, such as a magnetic disk 2027, is positioned at the back end of the cap 2022, as illustrated in Figures 23 and 24. The magnetic disk magnetically attracts the steel disk 2016 in the tip proximal end. In that way, the tip is securely yet removably held in the socket 1066 of body 1050.

The magnet or magnetic disk 2027 is made of a rare earth magnetic material, such as, for example, a Neodymium Iron Boron magnet (NdFeB) that is rated N52. In the invention, other suitable rare earth magnets rated N28 - N52 in their magnetic scale, or 28 $MGO_e$ - 52 $MGO_e$ must be used The N52 magnetic disk provides a strong securement of tip 1052 in the body 1050. This strong magnetic engagement not only physically secures the tip, but also maintains a strong and robust electrical contact between the proximal end of the tip and the contacts 2028, 2030 of the socket 1066. The magnetic securement of tip 1052 also allows the tip to be freely rotated around the socket, while staying secured in the socket. This provides greater flexibility to the user. The magnetic disk 2027 creates a pull force in the range of 0.5 - 6 pounds to secure the tip, and, in one embodiment, a pull force of approximately 2 pounds is provided for securing the tip in the socket. The tip can be readily rotated, but also may be readily removed when desired by manually overcoming the magnetic force. Although the magnetic mechanism is illustrated with the magnetic disk in the socket and the disk is on the tip, the arrangement might be reversed with the magnetic disk on the tip and the disk in the socket.

The spring contacts extend back from socket 1066, and contact the appropriate circuits 1070 and 1072 for providing the control for the light device and electrical power to the tip and the LED light engine. As noted, the body elements of the tip 2004a and 2004b, which are copper in an exemplary embodiment, provide the electrical connection from the electrical spring contacts 2028, 2030 to the light engine at the distal end 2000 of the tip. That is, electrical current is conducted down the length of the tip and the elements 2004a, 2004b. Simultaneously, the body elements 2004a, 2004b are also thermally conductive, and are thermally coupled with the light engine so as to draw heat away from the light engine, and away from the distal end of the tip. The heat is conducted away along the length of the tip through the body elements, and is appropriately dissipated through those body elements and through the thermoplastic material layer 2018. In that way, the light device 1002 of the invention removes the heat and provides a desirable long operating life for the light engine and the LED emitters.

Turning now to Figures 26-26C, one exemplary light engine for use in the invention is illustrated. Referring to Figure 26, light engine 2050 utilizes a substrate base 2052 with one or more LED emitter devices 2054 positioned thereon. Referring to Figure 26A, an exemplary illustrated embodiment utilizes three LED emitters that form an array. A light engine with this number of LED emitters is used to provide the curing light output power in the range of 1100 - 1800 $mW/cm^2$, as noted, while at the same time, controlling the heat generated by the light engine. The body elements 2004a, 2004b of the tip are configured and dimensioned to draw heat away to prevent a significant rise of tooth pulp temperature. The three (3) LED emitters, in combination with the unique thermal dissipation features of the tip, ensure that the heat generated during a curing cycle does not overheat or burn up the LED emitters, and does not provide heat at the distal end of the light tip that would damage the tissue of a tooth being cured. More specifically, the combination of the three LED emitters and the configurations and dimensions of the body element 2004a, 2004b are their thermal properties ensures that temperature is controlled, and the pulp temperature of a tooth being curing is not raised more than 5 degrees Centigrade. In one exemplary embodiment, LED emitters from CREE, Inc. of Durham, North Carolina, are utilized. Specifically, suitable CREE LED's in the EZ-900 Series might be utilized. In one embodiment, C470 EZ-900 emitters are utilized, which have a dominant wavelength 464-468.5 nm, and a radiated flux of 400 mW - 420 mW. The LED emitters 2054 are appropriately physically and electrically secured to base 2052. Base 2052, for example, might be an aluminum nitride substrate that provides electrical isolation, as well as good thermal conductivity. Base 2052 is then electrically adhered to the distal end 2000 of the tip 1052. Suitable positive and negative electrical connections are provided through the body elements 2004a, 2004b of the tip, and thus, suitable electrical connections are provided to the light engine 2050.

In accordance with one embodiment, the base 2052 includes contacts 2056 that connect with the two respective body elements 2004a, 2004b of the tip. In the embodiment illustrated, the contacts 2056 are in the form of tabs that fit into slots 2057 found in the elements 2004a, 2004b, as shown in Figure 22. Such a direct connection provides a robust electrical connection, and eliminates the need for any wiring between the tip elements 2004a, 2004b, and the substrate. As illustrated in Figures 26A and 26C, the top layer of the substrate includes suitable microstrip conductors and patterns 2058, and jumper wires 2060 for coupling the LED emitters 2054 together in a series electrical connection. A protective circuit component, such as a zener diode 2062 might be utilized between the contacts 2056 on the bottom of base 2052 for protection of the LED emitter elements 2054, as shown in Figure 26B. The base and LED emitters comprising the light engine are coupled to the distal end 2000 of the tip to provide light directly to the curing site. The light does not have to pass through a long light guide, and thus, the proper amount of light can be provided while generating less heat than curing lights that implement the light engine inside the body of the device and rely upon an elongated light guide. The unique tip design, wherein the elements 2004a, 2004b act as both electrical conductors, as well as thermal conductors, also ensures that sufficient power if delivered to the light engine, while the generated heat is directed away from the light engine, and away from the distal end of the tip.

Greater efficiency in the light delivery is also provided by using a non-imaging optical device, such as a non-imaging lens, to capture and collimate the generated light. Referring again to Figure 26, to collimate the light, a non-imaging lens element 2070 is coupled with the light engine. More specifically, the lens element is positioned over the light engine 2050, and particularly over the LED emitters 2054, at the distal end of the tip. Lens element 2070, as illustrated in Figures 26 and 26A, has a frustoconical section 2072 and a cylindrical section 2074. One end of the frustoconical section, and particularly the small diameter end 2076, is positioned over the LED emitters. The frustoconical section 2072 then tapers outwardly in diameter along its length to a larger diameter end 2078, where it continues, at that diameter, as the cylindrical section 2074. In one embodiment, the lens has lengths L of approximately 0.279 inches, and $L_2$ of approximately 0.219 inches, and a diameter D of approximately 0.320 inches. Also, the frustoconical section has a taper angle $\Theta$ of approximately 42 degrees.

Lens element 2070 is a non-imaging lens element, which collimates the light generated from LED emitters 2054, and directs that light out of a distal end 2080 of the lens element. The lens distal end or face surface 2080 generally represents the distal end of the tip 1052, and ultimately the distal end of the curing light device. In use, the distal end 2080 is positioned proximate to a work site, such as a site containing dental composite material that is to be cured. Light generated from the LED emitters 2054 is captured and collimated and effectively reflected in the body of the lens element 2070 to be directed out of the distal end 2080. In one embodiment, the lens element 2070 is a total internal reflector (TIR) lens element that is configured for capturing, collimating, and efficiently directing the light out to the end of the lens element for less optical loss and greater delivery of light energy to the curing cite. A suitable non-imaging lens element would be available from Schott North America, Inc. of Elmsford, New York.

To attach lens element 2070, the small diameter end 2076 might be coated to have a metalized body surface along its periphery, as illustrated in Figure 26A by circular metal pattern 2081. Similarly, the substrate forming base 2052 includes a metallization pattern 2082 thereon for abutting metal pattern 2081 and the lens element and sealing the light engine 2050 (See Figure 26C). The small diameter end 2076 of the lens element also incorporates a convex indentation 2084, as illustrated in Figure 26B. The convex indentation at the small diameter end 2076 of the lens element overlies the LED emitters 2054. For further attaching the lens element and sealing the LED emitters from the environment, a silicone adhesive is injected into the convex cavity 2084, such as through openings or holes 2086 in the base 2052. More specifically, a suitable silicone adhesive might be injected into one hole, filling the cavity, while air is directed out of the other hole 2086. One suitable silicone adhesive might be available from Schott North America, Inc. as a UV-200 index matching silicone adhesive. After the silicone adhesive is injected, the holes are then sealed, such as by soldering. Thus, the LED emitters are sealed from the environment, while allowing the radiant energy therefrom to pass through the interface to lens element 2070. The lens may be further secured in the tip 1052 using an adhesive around the periphery of the lens proximate the distal end 2080. A gap 2083 is provided in the tip for such adhesive. The end of plastic material 2018 is generally flush with the face or distal surface 2080.

The light system 1000 includes the curing light device 1002, and charger base 1004, as discussed herein. Appropriate circuitry contained in both the curing light device 1002 and the charger base 1004 provides the desirable charging, discharging, and operation of the system. In accordance with one feature, the light device 1002 incorporates a plurality of ultracapacitors for storing energy to power a light device. In an exemplary embodiment, as illustrated in Figure 25, two ultracapacitors 1068 (sometimes called supercapacitors) are charged through charger base 1004 and the circuitry therein, and are discharged to operate the light device 1002 and power the light engine at the distal end of the tip 1052. The appropriate charger circuitry is contained on the circuit board 1026 in the charger base, as illustrated in Figure 18. The circuitry for turning on the curing light device, changing the operational mode to the curing light device, and other operational features are contained on the appropriate circuit boards 1070 and 1072, as illustrated in Figure 25.

The curing light device has several operational curing modes. In one embodiment, the light device may be operated to provide several different curing cycles, including a five-second (5) cycle, a ten-second (10) cycle, and a twenty-second (20) cycle. As illustrated in Figure 21, suitable indicator lights 1094, as shown in Figure 21, provide an indication of the curing light cycle or mode that has been selected. Appropriate controls, such as push buttons 1074a, 1074b, may be used to turn the curing light device ON and OFF, to select the operational mode and curing cycle, and to begin the curing cycle. When a particular cycle is selected, the curing light will output a light beam for the selected amount of time. In accordance with another feature, light device 1002 incorporates periodic level shifting (PLS). Such periodic level shifting provides an increased light output, while maintaining desirable heat characteristics. Such a PLS feature is disclosed further in U.S. Patent No. 8,113,830. The control circuitry provides the several curing modes of five, ten, and twenty second, with the PLS feature, or without the PLS feature. Accordingly, six operational modes might be selected.

Referring again to Figure 21, button 1074a turns the unit ON and OFF, and also selects or deselects the PLS feature. Button 1074b controls the operating mode, and also controls an audible beeper. A charge indicator light 1094a, as shown in Figure 21, indicates the amount of time for curing that may be provided with the current charge. When there are 40 seconds or less of curing time left, the charge indicator light 1094a glows amber, warning the user that the charge is almost depleted. The charge indicator light turns red when there is not enough charge to complete the selected curing cycle duration. If the curing cycle duration is reduced, the light may change back to amber, indicating there is enough charge for a shorter curing cycle. The three top-most indicator lights 1094, as shown, indicate the time interval or operational cycle that is selected. To change the current selection, the selector button 1074b is pressed until a desired time interval is indicated by a respective illuminated light. That is, curing cycles of 5, 10, and 20 seconds may be selected. Then, when the proper curing cycle is selected, button 1074a is engaged to start the curing cycle. When button 1074a is pressed, the PLS feature will be automatically engaged. With the PLS feature, the LED emitters will appear to be flickering at the end of the tip. If button 1074a is pressed at any time during the curing cycle, it will stop the curing cycle. In accordance with one feature, the PLS feature may be disabled by pressing and holding button 1074a, when starting the curing cycle. The PLS feature will be disabled until the button is released. While the PLS is disabled, the curing light will maintain a steady light output of around 1,100 mW/cm$^2$, and the unit will beep once per second. The curing light emits a short, audible beep when button 1074a is pressed. The beep indicates that the curing cycle has begun. A slightly longer, audible beep will sound at the end of the curing cycle. During the 10 and 20 second cycles, a beep is sounded every 5 seconds, as well as at the end of the cycle. The curing light device might also be placed into silent mode by essentially holding down button 1074b when the curing cycle is being selected. As discussed further below, the processing circuitry is appropriately configured and programmed for providing the noted operational features and curing cycles.

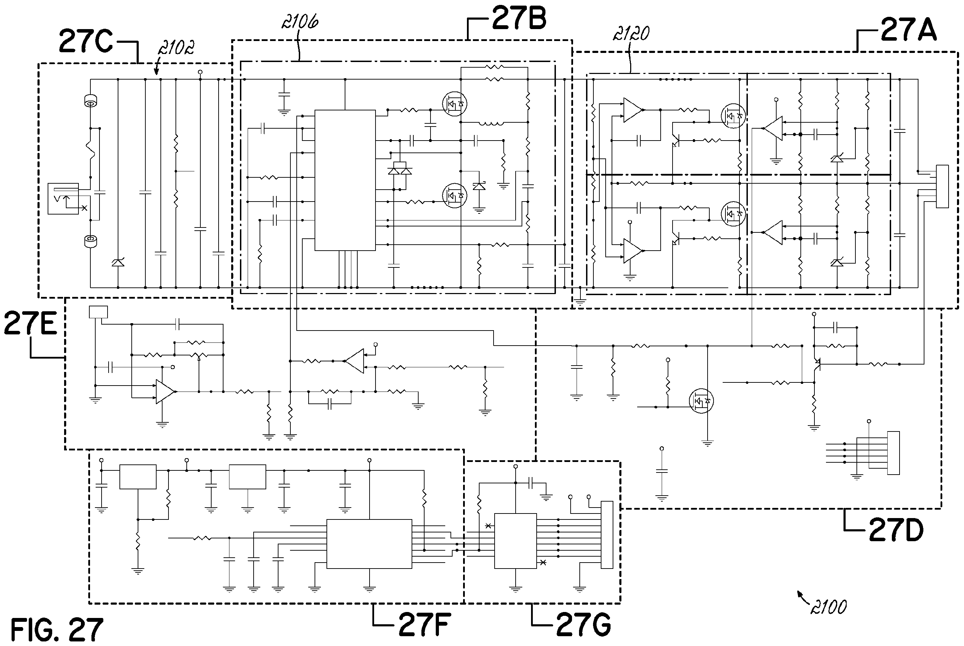

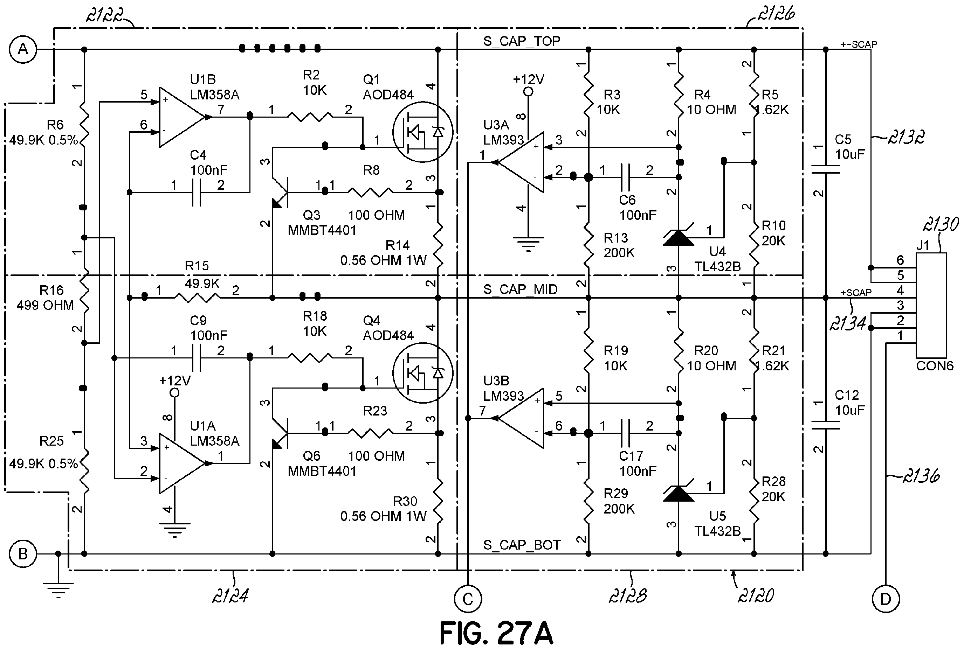

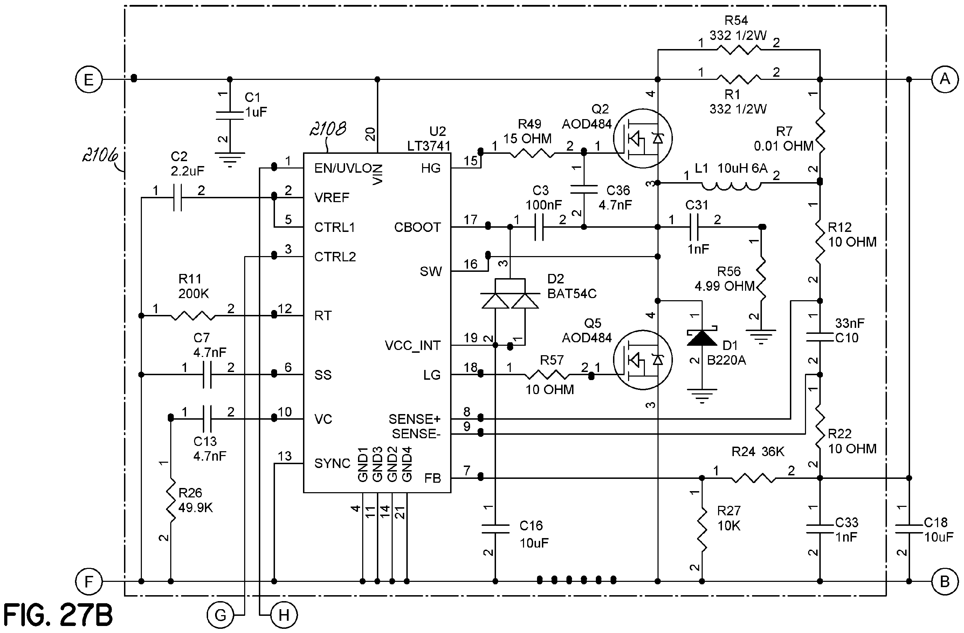

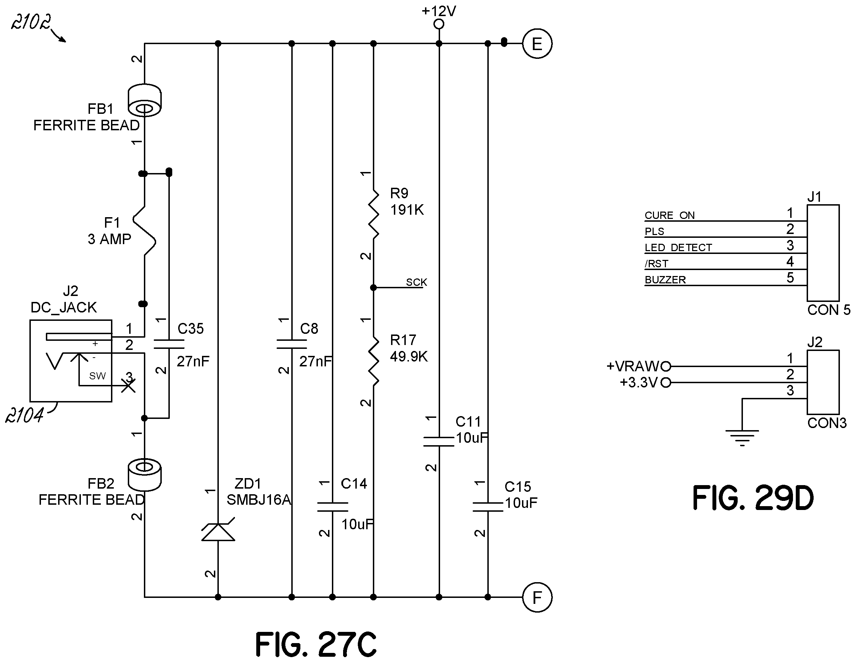

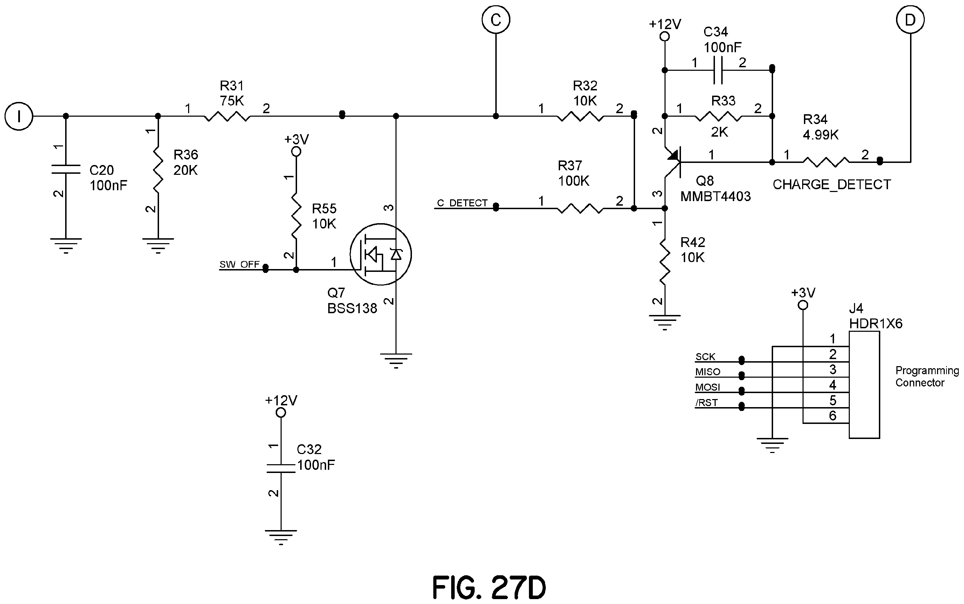

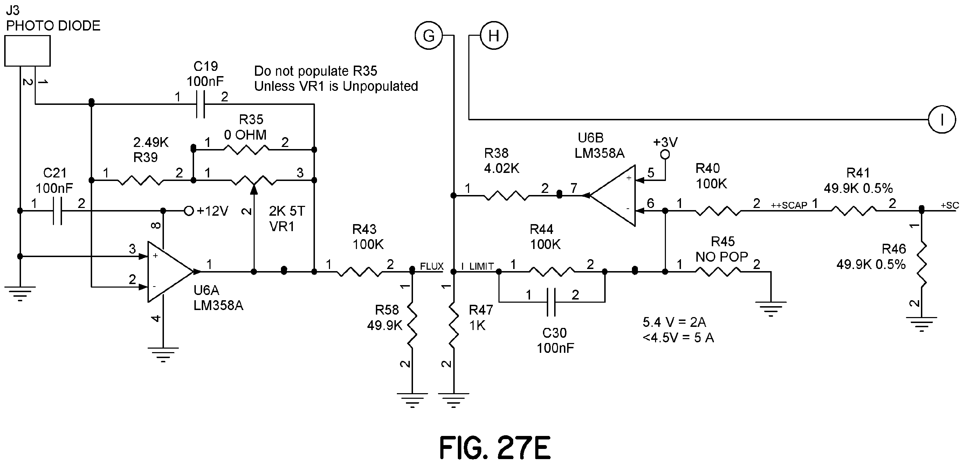

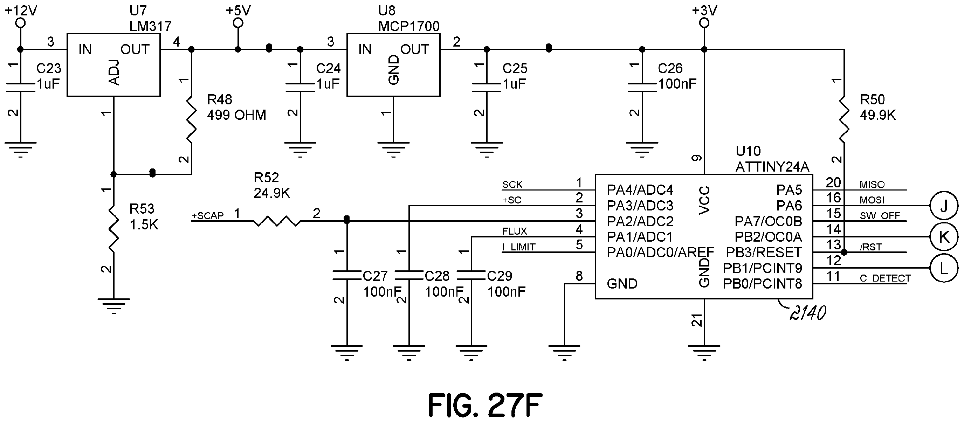

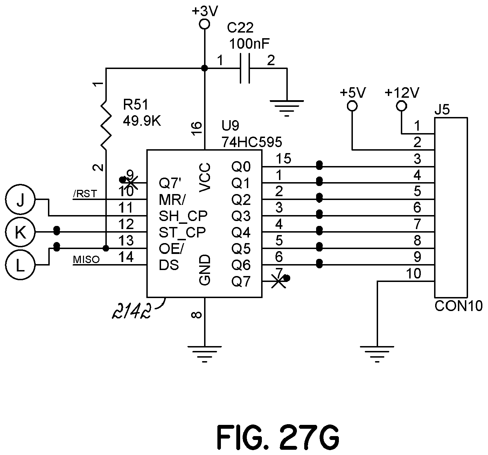

Turning to Figure 27, a main charger circuit is shown for charging the power supply and ultracapacitors of a light device. In the exemplary embodiment described herein, various circuits and their locations will be indicated in particular locations, such as either in the charger base 1004, or in the light device 1002. However, it would be readily understood that the location of particular circuits or circuit components is not particularly limiting, and that other embodiments might incorporate different circuit components in different locations. The main charger circuit of Figure 27 is shown broken up into several sections for the purposes of illustrating greater detail, such as in Figures 27A-27G. The circuitry of Figure 27 is generally contained on board 1026, as illustrated in Figure 18. The circuit of Figure 27 provides voltage conversion and the delivery of the desired voltage and current to the ultracapacitors. In accordance with one feature, the charger circuit 2100 provides individual charging of two ultracapacitors in a three-point connection charging circuit for more rapid charging. Furthermore, charger circuit 2100 incorporates trickle charge sections for maximum charging. Therefore a very rapid charge of the light device is provided, in the order of less than, or around 40 second, so that the light device may be repeatedly used without significant downtime for the purposes of charging.

The curing light device begins immediately charging upon being engaged with the charger base. That is, when the light device is put into the appropriate opening 1006, and the upstanding plug 1028 is plugged into socket 1086, the ultracapacitors will begin to charge. Indicator 1008 on the charger base provides an indication that the charge process is ongoing, and when the device is completely charged. The ultracapacitors each have a capacitance value of 100 Farads, and will provide a desirable number of operational cycles when they are fully charged. One suitable ultracapacitor for the invention is available from Maxwell Technologies of San Diego, California.

In accordance with one feature, the power supply incorporates two 100 Farad capacitors to provide the user with a desirable run time, and desirable large number of operational cycles while still maintaining a rapid charging time. In accordance with another feature, the two ultracapacitors, operating together, when fully charged, will provide a working time or operational run time of at least 1 minute. In another embodiment, the two ultracapacitors, when fully charged, will provide an operational run time of up to 10 minutes. In accordance with one particular embodiment, approximately 250 seconds of run time are provided by a full charge of the two capacitors. For example, that would provide around 25 individual 10-second curing cycles. The inventors have determined that the two 100-Farad ultracapacitors, that are charged utilizing the unique charging circuit as noted below, will provide a rapid charge of the light device of around 40 seconds, while providing a desirable amount of run time, such as the 250 seconds of run time noted. Therefore, that unique combination of the multiple ultracapacitors and the unique charging circuitry provides desirable features for the curing light device.

In accordance with another feature, the ultracapacitors do not heat up significantly when they are being charged, or when they are being discharged, and thus, do not generate a significant amount of heat that affects their operational life like batteries do. Therefore, a consistent amount of run time may be achieved with each full recharge. Furthermore, the ultracapacitors will last up to 500,000 charging cycles, which provides a significant life to the power supply of the curing light device.

Referring to Figure 27, the charger circuit 2100 includes an input section 2102, as illustrated in Figure 27C. Input circuit section 2102 includes an appropriate DC jack 2104 for plugging into a DC power supply to provide the twelve-volt DC signal. Such a DC power supply (not shown) will generally include an AC plug and suitable converter circuitry to convert AC to DC to the desirable level, such as twelve volts DC. The input section delivers twelve volts DC to the main power supply section 2106, as illustrated in Figure 27B. The main power supply section 2106 provides further DC signal conversion, such as down to a level of 5.4 volts DC. The main power supply section incorporates a suitable converter circuit 2108 to provide the step-down conversion. In one embodiment of the invention, converter circuit 2108 may be a 10V/20A constant current, constant voltage step-down converter.

The main power supply section provides a suitable DC voltage signal to the current source circuit 2120, which is coupled to the ultracapacitors to charge the ultracapacitors. Referring to Figure 27A, the current source circuit 2120 includes sub-circuits 2122, 2124, which act as current sources. There is one current source circuit for each ultracapacitor to be charged (two ultracapacitors in the exemplary embodiment). The current source circuit 2122, 2124 are then coupled to trickle charge circuits 2126 and 2128, respectively, for each current source circuit. Each of the trickle charge circuits 2126 and 2128 provide a top-off of the charge for each of the respective ultracapacitors.

In accordance with one feature, the current source circuit 2120, as illustrated in Figure 27A, provides a three-point connection to the series connected ultracapacitors. As may be appreciated, two series connected ultracapacitors have a top point of connection to the first one of the ultracapacitors, a middle point of connection where each of the ultracapacitors connect to each other, and then a bottom or ground point of connection at the second ultracapacitor. Referring specifically to the connector 2130, as illustrated in Figure 27A, the top point of connection to a first ultracapacitor is illustrated by circuit trace 2132. Circuit trace 2134 is the mid-point connection between the two ultracapacitors. Finally, circuit trace 2136 provides the ground connection to the second ultracapacitor. In that way, the various current source circuits 2122, 2124, and respective trickle charge circuits 2126, 2128 are coupled to each of the ultracapacitors in a three-point connection of traces 2132, 2134, 2136. Such a three-point connection provides rapid and efficient charging of the ultracapacitors, and also provides a complete charge that is generally equally distributed across the ultracapacitors.

Figures 27D and 27E illustrate additional operational circuitry that provides the detection of the charging process, as well as an indication of the charging by a photodiode, such as to provide illumination of the indicator 1008.

Figures 27F and 27G illustrate control circuitry for providing the desired control of the charging process, including a microprocessor or controller element 2140, as illustrated in Figure 27F, and a register circuit 2142, as illustrated in Figure 27G.

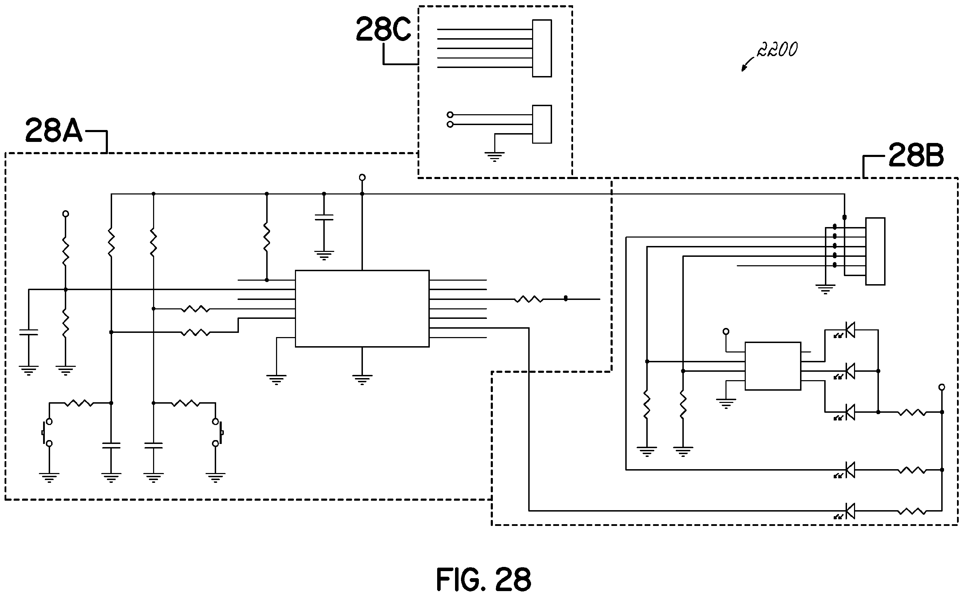

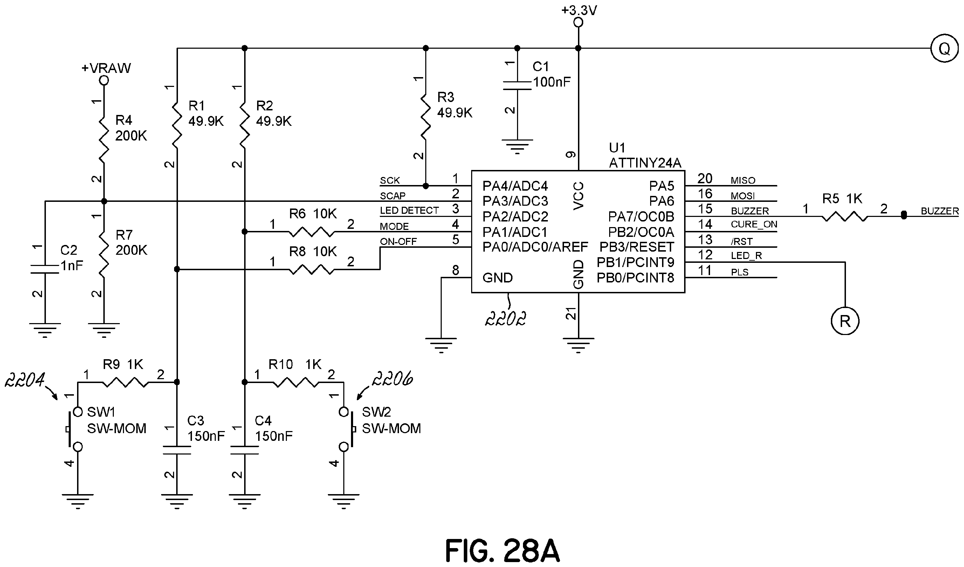

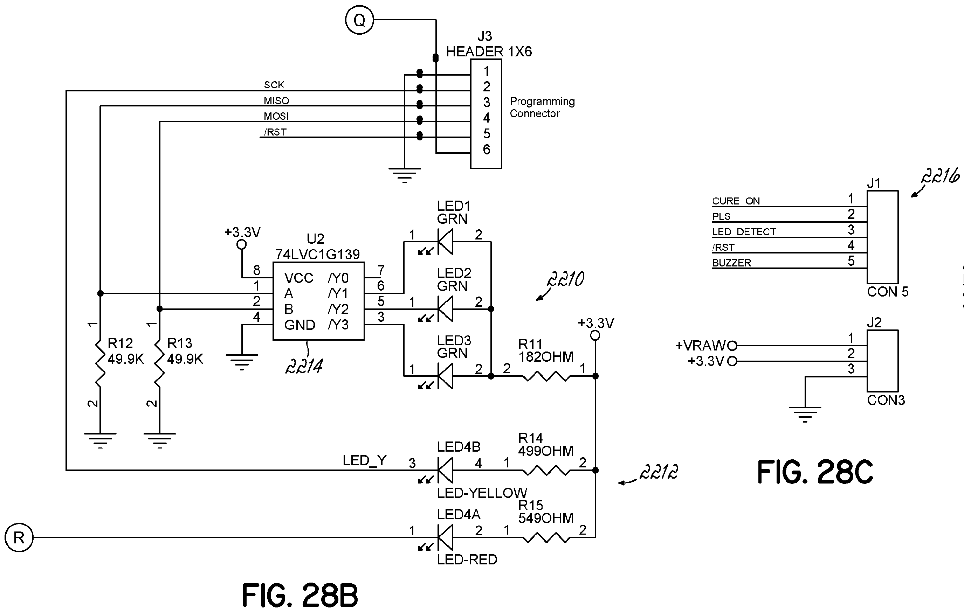

Figure 28 illustrates a main control circuit 2200 for a light device 1002. Generally, the main control circuit will be on board 1072, in the control section 1060 of the light device body 1050. Referring to Figure 28A, the main control circuit 2200 incorporates a control section, which includes a suitable processor or controller 2202 for controlling the operation of the light device. The controller 2202 interfaces with one or more switches 2204, 2206, which are actuated, such as by the buttons 1074, as illustrated in Figure 25. The switches control the ON/OFF characteristics of the light device, as well as the modes that are selected for curing. The main control circuit further includes an indicator section, as illustrated in Figure 28B, which includes various LEDs 2210, 2212, and a driver circuit 2214. The LEDs provide a desirable indication, such as through indicators 1094 to indicate the length of the cutting cycle (e.g. 5, 10, 20 seconds) as well as the particular mode, such as a PLS mode or a non-PLS mode.

As illustrated in Figure 28C, the main control circuit will also include an appropriate connector 2216 for connecting to a discharge circuit for discharging the ultracapacitors and driving the light engine for a curing process.

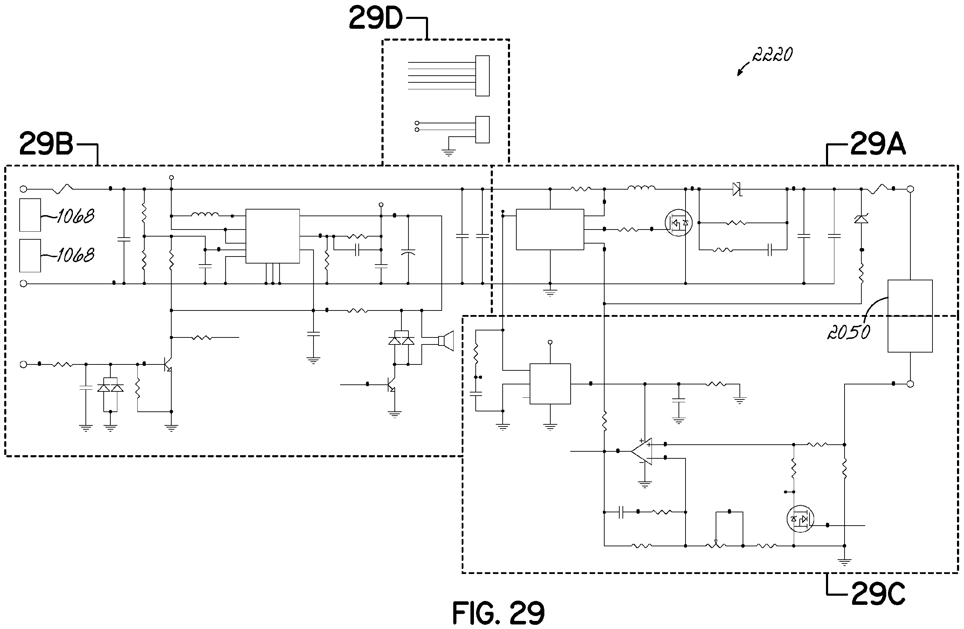

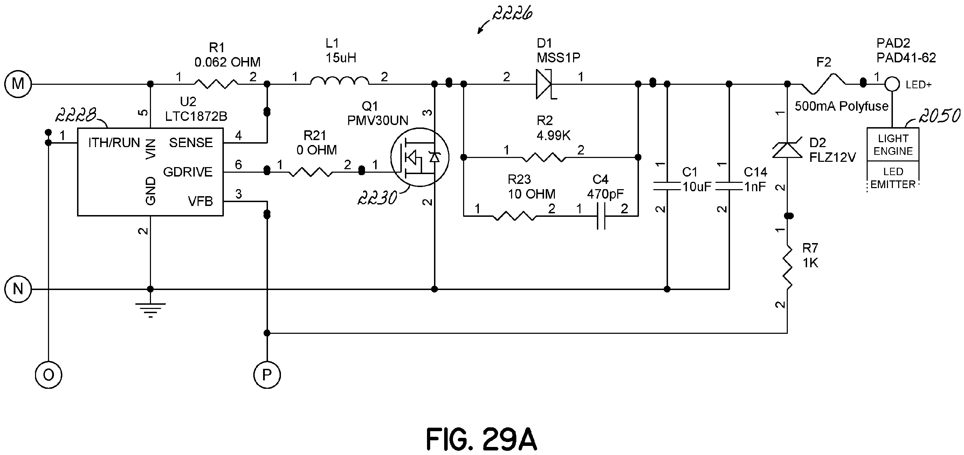

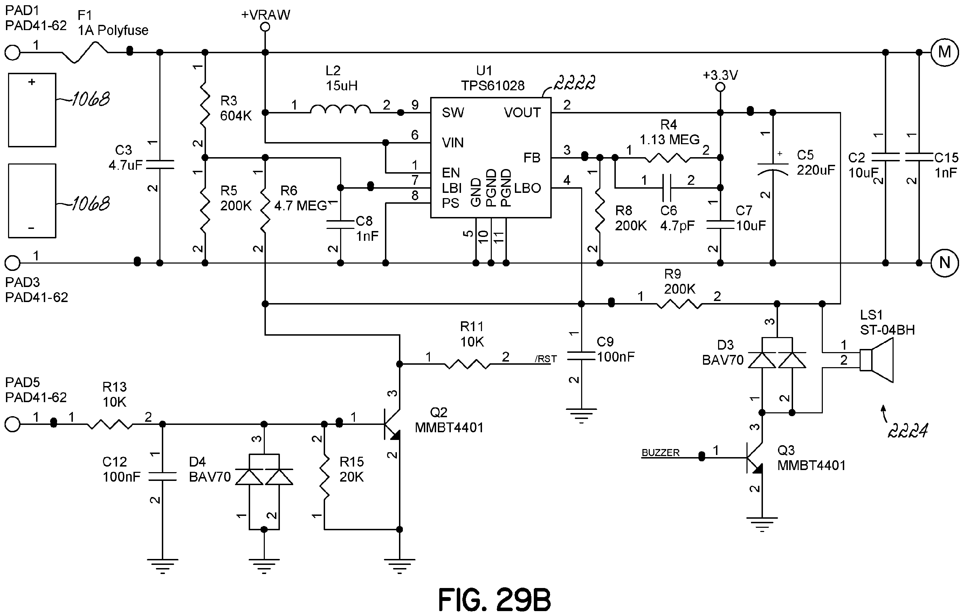

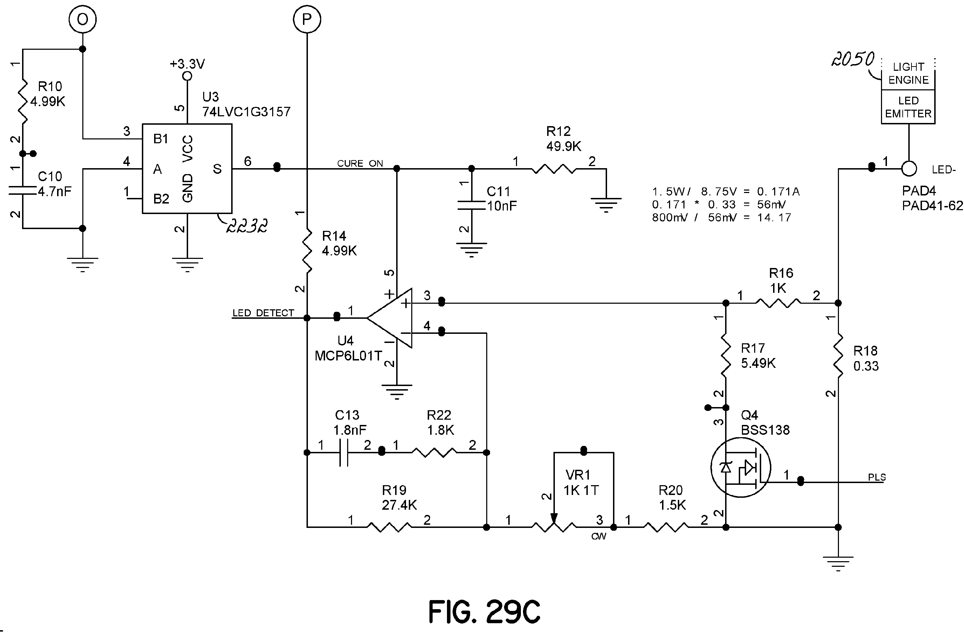

Referring to Figure 29, a discharge circuit is illustrated. Discharge circuit 2220 provides an input section, as illustrated in Figure 29B, that couples appropriately with ultracapacitors 1068. The ultracapacitors, as illustrated, are discharged in series and generally 5.2 volts DC is provided across the ultracapacitors, which is converted by an appropriate converter circuit component 2222, to around 3.3 volts. The input circuit may also provide an appropriate audio element, such as a buzzer or beeper 2224, for indicating the operation of the light device, such as the completion of a curing cycle. The appropriate control of the discharge is provided through a connector section 29D, which corresponds to the connector section 28C of the main control circuit 2200 (See Figure 28). The output voltage signal from the input section of Figure 29B is provided to discharge circuit sections 23A, 23C, which are coupled directly to the light engine LED emitters, as illustrated in Figure 29. More specifically, the circuit section illustrated in Figure 29A includes a boost converter circuit 2226 to drive the LED emitters of the light engine. The boost converter circuit 2226 includes an FET driver component 2228, which drives FET 2230. A solid state switch component 2232, as illustrated in Figure 29C, provides switch control to turn the curing light device ON and OFF.

In one embodiment, a curing light device has a body including a housing and a socket at an end thereof. A tip removably secured with the body has a proximal end and a distal end. The proximal end is configured for plugging into the body socket to removably secure the tip with the body. The tip includes a plurality of body elements formed of an electrically and thermally conductive material. The body elements are electrically isolated from each other to form separate electrical conductors in the tip. A light engine is positioned on the distal end of the tip and electrically coupled with the tip body elements and includes at least one light emitting element operable for emitting light. A non-imaging element is coupled with the light engine at the distal end of the tip for capturing and collimating the emitted light. The non-imaging element may include a non-imaging lens. The lens may have a frustoconical section. A power supply is positioned in the body housing and electrically coupled with electrical contacts in the socket. The tip body elements engage the socket electrical contacts to conduct electrical energy to power the light engine. The power supply is rechargeable and including at least one ultracapacitor element and in one embodiment could further include a pair of ultracapacitors. The power supply is operable for providing an operational run time of at least one minute and for providing an operational run time of up to 10 minutes. In a particular embodiment, the power supply is operable for providing an operational run time of approximately 250 seconds.

In another embodiment, the curing light device includes a magnetic mechanism configured for removably securing the tip in the socket. The magnetic mechanism can provide a force in the range of 0.5 to 6 pounds for securing the tip in the socket and can include a rare earth magnet. In one particular embodiment, the magnetic mechanism includes a magnet coupled with one of the body and the tip and a metal element coupled with the other of the body and the tip for removably securing the tip in the socket. In another embodiment, the tip includes body elements that come together to form the tip and are separated by an insulator element to electrically isolate the body elements. The tip can have a base that is wider than the proximal end with the proximal end of the tip extending beyond the base for plugging into the body socket. The tip body elements are configured to form contact structures at the proximal end of the tip, the contact structures engage the socket electrical contacts to conduct electrical energy. One or more of the tip body elements has a solid portion and a hollowed out portion along the length of the body element. The body elements of the tip are operable for drawing heat away from the light engine and the distal end of the tip. In a particular embodiment, the body elements of the tip are configured to draw heat away from the distal end of the tip and prevent a rise in the pulp of a tooth being cured greater than 5 degrees Centigrade.

In another embodiment, the curing light device has a light engine which includes three light emitting elements and is operable for providing an output power of 1100-1800 mW/cm$^2$.

In another embodiment, the curing light device includes a charger base for receiving the device body to recharge the power supply. The charger base provides a gravity force and including a plug that is configured to be received by a socket in the device body. The plug and socket require a removal force to separate the device and charger base that is less than the gravity force of the charger base to facilitate one hand removal of the light device from the charger base. The charger base may include a radiometer sensor operable for measuring a light output of the light device.

While the present invention has been illustrated by the description of the embodiments thereof, and while the embodiments have been described in considerable detail, additional advantages and modifications will readily appear to those skilled in the art.

**Claims**

1.  A curing light device comprising:

    a body (1050) including a housing and a socket (1066) at an end thereof, a tip (1052) having a proximal end and a distal end, the proximal end configured for plugging into the socket (1066) to removably secure the tip (1052) with the body, the tip (1052) including a plurality of tip body elements (2004) formed of an electrically and thermally conductive material, the tip body elements (2004) electrically isolated from each other to form separate electrical conductors in the tip (1052), a light engine (2050) including at least one light emitting element operable for emitting light, the light engine (2050) positioned on the distal end of the tip (1052) and electrically coupled with the tip body elements (2004), the tip body elements (2004) collectively forming a heat sink thermally coupled with the light engine (2050) for drawing heat way from the light engine (2050) and the distal end of the tip (1052), a non-imaging element (2070) coupled with the light engine (2050) at the distal end of the tip for capturing and collimating the emitted light, and a power supply (2106) positioned in the housing and electrically coupled with electrical contacts (2028, 2030) in the socket (1066), wherein the electrical contacts (2028, 2030) are spring contacts, that surround an inside of the socket (1066), the tip body elements (2004) engaging the socket electrical contacts (2028, 2030) to conduct electrical energy to power the light engine, the power supply (2106) being rechargeable and including at least one ultracapacitor element (1068).

2.  The curing light device of claim 1 further comprising a magnetic mechanism configured for removably securing the tip (1052) in the socket (1066).

3.  The curing light device of claim 2 wherein the magnetic mechanism provides a force in the range of 0.5 to 6 pounds for securing the tip (1052) in the socket (1066).

4.  The curing light device of either claim 2 or claim 3 wherein the magnetic mechanism includes a magnet (2027) coupled with one of the body and the tip and a metal element (2016) coupled with the other of the body and the tip for removably securing the tip in the socket.

5.  The curing light device of any preceding claim wherein the tip body elements (2004) come together to form the tip and are separated by an insulator element (2006) to electrically isolate the body elements.

6.  The curing light device of any preceding claim wherein the body elements (2004) of the tip are operable for drawing heat away from the light engine (2050) and the distal end of the tip to prevent a rise in the pulp of a tooth being cured of greater than 5 degrees Centigrade.

7.  The curing light device of any preceding claim wherein the power supply (2106) further comprises a pair of ultracapacitors (1068).

8.  The curing light device of any preceding claim wherein the power supply (2106) is operable for providing an operational run time of at least one minute and up to 10 minutes.

9.  The curing light device of any preceding claim wherein the light engine (2050) includes three light emitting elements (2054), the light engine operable for providing an output power of 1100-1800 mW/cm$^2$.

10. The curing light device of any preceding claim wherein the tip body elements (2004) are configured to form contact structures (2010, 2012) at the proximal end of the tip, the contact structures (2010, 2012) engaging the socket electrical contacts to conduct electrical energy.

11. The curing light device of any preceding claim wherein at least one of the body elements (2004) has a solid portion and a hollowed out portion along the length of the body element.

12. The curing light device of any preceding claim wherein the tip (1052) has a base that is wider than the proximal end, the proximal end of the tip extending beyond the base for plugging into the body socket (1066).

13. The curing light device of any preceding claim further comprising a charger base (1004) for receiving the device body to recharge the power supply, the charger base (1004) providing a gravity force and including a plug (1028) that is configured to be received by a socket (1086) in the device body, the plug and socket requiring a removal force to separate the device and charger base that is less than the gravity force of the charger base (1004) to facilitate one hand removal of the light device from the charger base (1004).

14. The curing light device of claim 13 wherein the charger base (1004) includes a radiometer sensor operable for measuring a light output of the light device.

15. The curing light device of any preceding claim wherein the non-imaging element is a non-imaging lens (2070).

**Patentansprüche**

1. Härtungslichtvorrichtung, die Folgendes umfasst:

einen Körper (1050) mit einem Gehäuse und einer Buchse (1066) an einem Ende davon, einer Spitze (1052) mit einem proximalen Ende und einem distalen Ende, wobei das proximale Ende zum Einstecken in die Buchse (1066) gestaltet ist, um die Spitze (1052) abtrennbar am Körper zu befestigen, wobei die Spitze (1052) aufweist: mehrere Spitzenkörperelemente (2004), die aus einem elektrisch und wärmeleitfähigen Material hergestellt sind, wobei die Spitzenkörperelemente (2004) elektrisch voneinander isoliert sind, um separate elektrische Leiter in der Spitze (1052) zu bilden, ein Lichtmodul (2050), das wenigstens ein lichtemittierendes Element aufweist, das zum Emittieren von Licht funktionell ist, wobei das Lichtmodul (2050) am distalen Ende der Spitze (1052) positioniert und elektrisch mit den Spitzenkörperelementen (2004) gekoppelt ist, wobei die Spitzenkörperelemente (2004) zusammen eine Wärmesenke bilden, die thermisch mit dem Lichtmodul (2050) gekoppelt ist, um Wärme vom Lichtmodul (2050) und dem distalen Ende der Spitze (1052) weg abzuziehen, ein mit dem Lichtmodul (2050) gekoppeltes nicht-bildgebendes Element (2070) am distalen Ende der Spitze zum Erfassen und Bündeln des emittierten Lichts, und eine Stromversorgung (2106), die in dem Gehäuse positioniert und elektrisch mit elektrischen Kontakten (2028, 2030) in der Buchse (1066) gekoppelt ist, wobei die elektrischen Kontakte (2028, 2030) Federkontakte sind, die ein Inneres der Buchse (1066) umgeben, wobei die Spitzenkörperelemente (2004) die elektrischen Kontakte (2028, 2030) der Buchse in Eingriff nehmen, um elektrische Energie zum Betreiben des Lichtmoduls zu leiten, wobei die Stromversorgung (2106) wiederaufladbar ist und wenigstens ein Ultrakondensatorelement (1068) aufweist.

2. Härtungslichtvorrichtung nach Anspruch 1, die ferner einen magnetischen Mechanismus umfasst, der zum abtrennbaren Befestigen der Spitze (1052) in der Buchse (1066) gestaltet ist.

3. Härtungslichtvorrichtung nach Anspruch 2, wobei der magnetische Mechanismus eine Kraft im Bereich von 0,5 bis 6 Pfund zum Befestigen der Spitze (1052) in der Buchse (1066) bereitstellt.

4. Härtungslichtvorrichtung nach Anspruch 2 oder Anspruch 3, wobei der magnetische Mechanismus einen Magneten (2027), der mit einem von dem Körper und der Spitze gekoppelt ist, und ein Metallelement (2016), das mit dem anderen von dem Körper und der Spitze gekoppelt ist, zum abtrennbaren Befestigen der Spitze in der Buchse aufweist.

5. Härtungslichtvorrichtung nach einem der vorhergehenden Ansprüche, wobei die Spitzenkörperelemente (2004) zu einer Spitze zusammenkommen und zum elektrischen Isolieren der Körperelemente durch ein Isolatorelement (2006) getrennt sind.

6. Härtungslichtvorrichtung nach einem der vorhergehenden Ansprüche, wobei die Körperelemente (2004) der Spitze funktionell sind zum Abziehen von Wärme vom Lichtmodul (2050) und dem distalen Ende der Spitze weg, um einen Anstieg in der Pulpa eines Zahns, der gehärtet wird, von mehr als 5 Grad Celsius zu verhüten.

7. Härtungslichtvorrichtung nach einem der vorhergehenden Ansprüche, wobei die Stromversorgung (2106) ferner ein Ultrakondensatorenpaar (1068) umfasst.

8. Härtungslichtvorrichtung nach einem der vorhergehenden Ansprüche, wobei die Stromversorgung (2106) zum Bereitstellen einer Betriebslaufzeit von wenigstens einer Minute und bis zu 10 Minuten funktionell ist.

9. Härtungslichtvorrichtung nach einem der vorhergehenden Ansprüche, wobei das Lichtmodul (2050) drei lichtemittierende Elemente (2054) aufweist, wobei das Lichtmodul zum Bereitstellen einer Abgabeleistung von 1100 - 1800 mW/cm$^2$ funktionell ist.

10. Härtungslichtvorrichtung nach einem der vorhergehenden Ansprüche, wobei die Spitzenkörperelemente (2004) zum Bilden von Kontaktstrukturen (2010, 2012) am proximalen Ende der Spitze gestaltet sind, wobei die Kontaktstrukturen (2010, 2012) die elektrischen Kontakte der Buchse zum Leiten elektrischer Energie in Eingriff nehmen.

11. Härtungslichtvorrichtung nach einem der vorhergehenden Ansprüche, wobei wenigstens eines der Körperelemente (2004) entlang der Länge des Körperelements einen massiven Teil und einen ausgehöhlten Teil hat.

12. Härtungslichtvorrichtung nach einem der vorhergehenden Ansprüche, wobei die Spitze (1052) eine Basis hat, die breiter als das proximale Ende ist, wobei das proximale Ende der Spitze sich über die Basis hinaus erstreckt, um in die Körperbuchse (1066) gesteckt zu werden.

13. Härtungslichtvorrichtung nach einem der vorhergehenden Ansprüche, die ferner eine Ladebasis (1004) zum Aufnehmen des Vorrichtungskörpers zum Aufladen der Stromversorgung umfasst, wobei die Ladebasis (1004) eine Schwerkraft bereitstellt und einen Stecker (1028) aufweist, der zur Aufnahme durch eine Buchse (1086) im Vorrichtungskörper gestaltet ist, wobei der Stecker und die Buchse zum Trennen der Vorrichtung und der Ladebasis eine Abtrennkraft erfordern, die kleiner als die Schwerkraft der Ladebasis (1004) ist, um das einhändige Entfernen der Lichtvorrichtung von der Ladebasis (1004) zu ermöglichen.

14. Härtungslichtvorrichtung nach Anspruch 13, wobei der Ladesockel (1004) ein Strahlungsmessgerät aufweist, das zum Messen einer Lichtausgabe der Lichtvorrichtung funktionell ist.

15. Härtungslichtvorrichtung nach einem der vorhergehenden Ansprüche, wobei das nicht-bildgebende Element eine nicht-bildgebende Linse (2070) ist.


**Revendications**

1. Appareil de photopolymérisation comprenant :

un corps (1050) comprenant un boîtier et une douille (1066) à une extrémité de celui-ci, une pointe (1052) ayant une extrémité proximale et une extrémité distale, l'extrémité proximale étant configurée pour s'enficher dans la douille (1066) afin de fixer de manière amovible la pointe (1052) au corps, la pointe (1052) comprenant une pluralité d'éléments de corps de pointe (2004) formés en un matériau électriquement et thermiquement conducteur, les éléments de corps de pointe (2004) étant isolés électriquement l'un de l'autre pour former des conducteurs électriques séparés dans la pointe (1052), un moteur lumière (2050) comprenant au moins un élément luminescent utilisable pour émettre de la lumière, le moteur lumière (2050) étant positionné sur l'extrémité distale de la pointe (1052) et couplé électriquement aux éléments de corps de pointe (2004), les éléments de corps de pointe (2004) formant collectivement un puits thermique couplé thermiquement au moteur lumière (2050) pour retirer de la chaleur du moteur lumière (2050) et de l'extrémité distale de la pointe (1052), un élément ne formant pas d'image (2070) couplé au moteur lumière (2050) à l'extrémité distale de la pointe pour capter et collimater la lumière émise, et
une alimentation en électricité (2106) positionnée dans le boîtier et couplée électriquement à des contacts électriques (2028, 2030) dans la douille, (1066), dans lequel les contacts électriques (2028, 2030) sont des contacts à ressort qui entourent un intérieur de la douille (1066), les éléments de corps de pointe (2004) engageant les contacts électriques (2028, 2030) de la douille pour conduire de l'énergie électrique afin d'alimenter le moteur lumière, l'alimentation en électricité (2106) étant rechargeable et comprenant au moins un élément ultracondensateur (1068).

2. Appareil de photopolymérisation selon la revendication 1, comprenant en outre un mécanisme magnétique configuré pour fixer la pointe (1052) de manière amovible dans la douille (1066).

3. Appareil de photopolymérisation selon la revendication 2, dans lequel le mécanisme magnétique fournit une force dans la plage de 0,5 à 6 livres pour fixer la pointe (1052) dans la douille (1066).

4. Appareil de photopolymérisation selon la revendication 2 ou la revendication 3, dans lequel le mécanisme magnétique comprend un aimant (2027) couplé à l'un d'entre le corps et la pointe et un élément métallique (2016) couplé à l'autre d'entre le corps et la pointe pour fixer de manière amovible la pointe dans la douille.

5. Appareil de photopolymérisation selon l'une quelconque des revendications précédentes, dans lequel les éléments de corps de pointe (2004) se joignent pour former la pointe et sont séparés par un élément isolant (2006) pour isoler électriquement les éléments du corps.

6. Appareil de photopolymérisation selon l'une quelconque des revendications précédentes, dans lequel les éléments de corps (2004) de la pointe sont utilisables pour retirer de la chaleur du moteur lumière (2050) et de l'extrémité distale de la pointe afin d'empêcher une hausse dans la pulpe d'une dent étant traitée de plus de 5 degrés centigrades.

7. Appareil de photopolymérisation selon l'une quelconque des revendications précédentes, dans lequel l'alimentation en électricité (2106) comprend en outre une paire d'ultracondensateurs (1068).

8. Appareil de photopolymérisation selon l'une quelconque des revendications précédentes, dans lequel l'alimentation en électricité (2106) est utilisable pour fournir un temps de fonctionnement opérationnel d'au moins une minute et de jusqu'à 10 minutes.

**9.** Appareil de photopolymérisation selon l'une quelconque des revendications précédentes, dans lequel le moteur lumière (2050) comprend trois éléments luminescents (2054), le moteur lumière étant utilisable pour fournir une puissance de sortie de 1100-1800 mW/cm$^2$.

**10.** Appareil de photopolymérisation selon l'une quelconque des revendications précédentes, dans lequel les éléments de corps de pointe (2004) sont configurés pour former des structures de contact (2010, 2012) à l'extrémité proximale de la pointe, les structures de contact (2010, 2012) engageant les contacts électriques de la douille pour conduire de l'énergie électrique.

**11.** Appareil de photopolymérisation selon l'une quelconque des revendications précédentes, dans lequel au moins l'un des éléments de corps (2004) a une partie solide et une partie creusée le long de la longueur de l'élément de corps.

**12.** Appareil de photopolymérisation selon l'une quelconque des revendications précédentes, dans lequel la pointe (1052) a une base qui est plus large que l'extrémité proximale, l'extrémité proximale de la pointe s'étendant au-delà de la base pour s'enficher dans la douille du corps (1066).

**13.** Appareil de photopolymérisation selon l'une quelconque des revendications précédentes, comprenant en outre une base de chargeur (1004) pour recevoir le corps de l'appareil afin de recharger l'alimentation en électricité, la base de chargeur (1004) fournissant une force de gravité et comprenant une fiche (1028) qui est configurée pour être reçue par une douille (1086) dans le corps de l'appareil, la fiche et la douille exigeant une force normale pour séparer le dispositif et la base de chargeur qui est moindre que la force de gravité de la base de chargeur (1004) afin de faciliter l'enlèvement d'une main de l'appareil de lumière de la base de chargeur (1004).

**14.** Appareil de photopolymérisation selon la revendication 13, dans lequel la base de chargeur (1004) comprend un capteur de radio mètre utilisable pour mesurer une sortie de lumière de l'appareil de lumière.

**15.** Appareil de photopolymérisation selon l'une quelconque des revendications précédentes dans lequel l'élément ne formant pas d'image est une lentille ne formant pas d'image (2070).

**FIG. 1**

**FIG. 2**

EP 2 815 719 B1

*10*

*27*

106 — POWER
111 — CHARGING
113 — CHARGED

*104*

## FIG. 1A

EP 2 815 719 B1

FIG. 2A

FIG. 3

FIG. 5

FIG. 4

POWER SUPPLY

ULTRA CAPACITOR

EP 2 815 719 B1

FIG. 6

CURRENT FOLDBACK

5.08V

OUTPUT VOLTAGE

OUTPUT VOLTAGE

4.6A

OUTPUT CURRENT

FIG. 7

CAP CHARGE VOLTAGE

V

T

FIG. 8

TRANSIENT PERIOD

STEADY STATE PERIOD

$V_S$

0.99$V_S$

$V_C$

CAPACITOR CHARGING VOLTAGE

0.63$V_S$

0.5$V_S$

CAPACITOR VOLTAGE

0  0.7T  1T      2T        3T          4T          5T

TIME,$t$

TIME CONSTANTS, T

## FIG. 9A

$i = \dfrac{V_S}{R}$

0.5i

0.37i

CAPACITOR VOLTAGE

CAPACITOR CHARGING CURRENT

$i_C$

0  0.7T  1T                                5T

TIME,$t$

## FIG. 9B

H-BRIDGE BUCK-BOOST CONVERTER

200

ULTRACAP 10F TO 1000F

L1

U1

202

EN

U2

V TO I CONV

LED1

C1
100F

ULTRACAP

C2
100F

ULTRACAP

S1

R1

R2

R3
100mΩ

U3

U4
LTC3204

2    VIN        VOUT    3

3.3VDC

C6
2.2uF

6    SHDN

C7
2.2uF

1    GND_1    GND_7    7

C+        C-

4         5

C8
2.2uF

FIG. 10

EP 2 815 719 B1

BUCK CONVERTER

*300*

ULTRACAP 10F TO 1000F

C1
100F

ULTRACAP

C2
100F

ULTRACAP

S1

U1

U2
V TO I CONV

L1

LED1

D1

R1

R2

R3
100mΩ

U3

3.3VDC

U4
LTC3204

2    VIN    VOUT    3

C6
2.2uF

6    SHDN

C7
2.2uF

1    GND_1    GND_7    7

C+    C−

4    5

C8
2.2uF

FIG. 11

EP 2 815 719 B1

BOOST CONVERTER

ULTRACAP 10F TO 1000F

C1 100F
ULTRACAP

C2 100F
ULTRACAP

S1

U4 LTC3204

VIN    VOUT
SHDN
GND_1  GND_7
C+     C-

C6 2.2uF

C7 2.2uF

C8 2.2uF

3.3VDC

Q1

L1    D1

U1

U2
V to I conv

R1    R2

LED1

R3 100mΩ

U3

FIG. 12

400

EP 2 815 719 B1

FIG. 13

FIG. 14

EP 2 815 719 B1

FLYBACK CONVERTER

FIG. 15

EP 2 815 719 B1

SEPIC CONVERTER

ultracap 10F to 1000F

C1
ultracap

C2
ultracap

S1

Q1

L1    C4    D1

U1

L2

U2
V to I conv

R1    R2

C3    LED1

R3
100mΩ

U3

3.3VDC

U4
LTC3204

C6
2.2uF

VIN    VOUT

SHDN

GND_1    GND_7

C+    C-

C7
2.2uF

C8
2.2uF

700

FIG. 16

EP 2 815 719 B1

**FIG. 17**

**FIG. 18**

**FIG. 19**

**FIG. 21**

FIG. 20

FIG. 22

FIG. 23

EP 2 815 719 B1

FIG. 24

FIG. 26

FIG. 25

2050

2080

2074
2078
2072
2058
2081
2056
2058

2058
2052
2076
2056

**FIG. 26A**

2050

D₁

2080

~2074~

L₁
L₂

~2072~

θ

2078
2070
2084

2076

2052
2056

2062

2056

**FIG. 26B**

2060
2086
2054

2052

2058

2060

2054
2086
2058

2058

2060

2082

**FIG. 26C**

FIG. 27

27C    2102    27B    2106    27A    2120

27E

27D

27F    27G

2100

EP 2 815 719 B1

42

FIG. 27A

EP 2 815 719 B1

FIG. 27B

FIG. 27C

FIG. 29D

EP 2 815 719 B1

FIG. 27D

EP 2 815 719 B1

FIG. 27E

FIG. 27F

FIG. 27G

28C

2200

28A

28B

FIG. 28

FIG. 28A

EP 2 815 719 B1

Q

J3
HEADER 1X6

SCK
MISO
MOSI
/RST

1
2
3
4
5
6

Programming
Connector

+3.3V

U2
74LVC1G139

8 VCC
1 A      /Y0 7
2 B      /Y1 6
4 GND    /Y2 5
         /Y3 3

2214

R12
49.9K

R13
49.9K

1

2

LED1
GRN

LED2
GRN

LED3
GRN

2210

R11
182OHM

+3.3V

LED_Y

LED4B

R14
499OHM

LED-YELLOW

2212

R

LED4A

R15
549OHM

LED-RED

FIG. 28B

J1                2216

CURE_ON    1
PLS        2
LED_DETECT 3
/RST       4
BUZZER     5

CON 5

J2

+VRAW     1
+3.3V     2
          3

CON3

FIG. 28C

FIG. 29

FIG. 29A

FIG. 29B

EP 2 815 719 B1

FIG. 29C

## REFERENCES CITED IN THE DESCRIPTION

**Patent documents cited in the description**

- US 6419483 B
- WO 2010115082 A
- US 20120230017 A
- US 8113830 B